# EUROPEAN PATENT APPLICATION

(11) **EP 1 492 271 A1**
(43) Date of publication of application: **29.12.2004**
(21) Application number: 03745456.8
(22) Date of filing: 01.04.2003
(51) Int. Cl.: H04L 12/28

(54) **SIGNAL PROCESSING SYSTEM, SIGNAL OUTPUT DEVICE, SIGNAL RECEIVING DEVICE, AND COMMUNICATION CONTROL METHOD**

(30) Priority: 03.04.2002 JP 2002101453
(71) Applicant: Sony Corporation, Tokyo 141-0001 (JP)
(72) Inventor: Sato, Makoto, Tokyo 141-0001 (JP); Kato, Junji, Tokyo 141-0001 (JP); Miyano, Michio, Tokyo 141-0001 (JP); Kageyama, Yuichi, Tokyo 141-0001 (JP); Kikkawa, Norifumi, Tokyo 141-0001 (JP)
(74) Representative: Robinson, Nigel Alexander Julian
(86) International application number: PCT/JP2003/004175
(87) International publication number: WO 2003/084141

(57) **Abstract**

The present invention relates to a signal processing system, and proposes the establishment of a proper signal path between a signal output device and a signal input device. A signal output device 4, when an establishment request signal requesting the establishment of a signal path is sent to a signal input device 5, sends the establishment request signal to the signal input device 5 with signal path information according to a signal path inside the signal output device attached thereto, and the signal input device 5 establishes the signal path between the signal output device 4 and the signal input device 5 based on the signal path information, thus making it possible to establish a proper signal path between the signal output device 4 and the signal input device 5

## Description

### Technical Field

The present invention relates to a signal processing system, a signal output device, a signal input device and a communication control method, and is suitably applied to a network system for communicating data between various kinds of AV (Audio Visual) devices connected on a network.

### Background Art

Heretofore, there is an IEEE (Institute of Electrical Electronics Engineers) 1394 standard as bus standards for transferring multimedia data with high speed in real-time, and various kinds of AV devices which can mutually transmit data through a network using digital serial buses under the IEEE1394 standard have been developed.

In such network system, provided are an isochronous transfer mode for transmitting real-time data and an asynchronous transfer mode for transmitting control commands without fail.

In this network system, therefore, a logical connection (hereinafter, referred to as logical connection) should be established as a signal transfer path between a source and a sink to transmit real-time data, the source generating and outputting the real-time data, the sink receiving the real-time data outputted from the source.

On the other hand, in this network system, the AV devices connected to the network system can be controlled by transmitting AV/C (Audio/video control) command·transaction·set (A/V Command Transaction Set) (hereinafter, referred to as AV/C command) as a control command.

By the way, there exist various plugs for both ends of logical connections, and the plugs include a subunit·plug (Subunit Plug) for transmitting signals inside a device, a plug·control·register (Plug Control Register) (hereinafter, referred to as PCR) for inputting/outputting digital signals between devices, and an external·plug (External Plug) for inputting/outputting analog signals between devices.

As the subunit·plug, there exist a subunit·source·plug (Subunit Source Plug) for output and a subunit·destination·plug (Subunit Destination Plug) for input. As the PCR, there exist an oPCR (Output Plug Control Register) for output and an iPCR (Input Plug Control Register) for input. As the external·plug, there exist an external·output·plug (External Output Plug) for output and an external·input·plug (External Input Plug) for input. In this connection, plugs for output are referred to as output plugs and plugs for input are referred to as input plugs in the following description.

In addition, as a logical connection, there exist an internal device connection and an interdevice connection, and the internal device connection indicates a signal path existing inside a device and the interdevice connection indicates a signal path between a source and a sink.

Further, the interdevice connections have various forms. That is, the interdevice connections include a point·to·point (Point-to-Point) connection (hereinafter, referred to as PtoP connection) in which one oPCR and one iPCR are connected on one isochronous channel (hereinafter, referred to as channel).

In addition, the interdevice connections include a broadcast·out (Broadcast out) connection (hereinafter, referred to Bout connection) in which one oPCR is connected to one channel, and a broadcast·in (Broadcast in) connection (hereinafter, referred to as Bin connection) in which one iPCR is connected to one channel, and these Bout connection and Bin connection are referred to as broadcast (Broadcast) connection.

In addition, the interdevice connections include an external·connection in which an external·output·plug and an external·input·plug are connected.

A procedure to establish and cancel such logical connection is standardized by IEC (International Electrotechnical Commission) 61883-1.

It should be noted that the establishment of one interdevice connection in a network system requires a channel and an isochranous band (hereinafter, referred to band), and the channel and band are referred to as isochronous resource (hereinafter, referred to as resource).

By the way, in such network system, a command set called AV/C connection·and·compatibility·management (AV/C Connection and Compatibility Management) (hereinafter, referred to as CCM) is provided to mutually communicate information for establishing a proper logical connection using a control command which is communicated between a source and a sink at the time of establishing a logical connection.

Now, explanation will be made on how to establish a signal path, which is a logical connection, using the CCM. The internal device connection can be established using a signal·source (SIGNAL SOURCE) command provided under the CCM, and the interdevice connection can be established using an input·select (INPUT SELECT) command provided under the CCM.

The input·select·command defines four sub·functions (sub functions): connect (CONNECT); path·change (PATH CHANGE); select (SELECT); and disconnect (DISCONNECT), and one of them should be specified when an input·select·command is sent. Now, a concrete explanation will be made on a case in which a sink accepts an input·select·command, that is, returns an accepted (ACCEPTED) response.

The sink establishes an interdevice connection with a designated source in the case of receiving CONNECT, and in the case of receiving PATH·CHANGE, it basically establishes an interdevice connection with a designated source, but it is able to reject the establishment of the interdevice connection, that is, to return a rejected (REJECTED) response if it does not select the designated source.

Further, when the sink receives SELECT, it selects a designated source and in this case, the sink can decide by itself whether to establish an interdevice connection. When the sink receives DISCONNECT, it disconnects a designated interdevice connection.

Under the CCM, a source communicates information on the source to a sink by transmitting an input·select·command, so that the sink establishes an interdevice connection with the source based on the information. In this case, in the network system, the sink which is a transmission target of the input·select·command should be recorded in the source in advance. In the CCM, an output·preset (OUTPUT PRESET) command is prepared for realizing such function. In addition, in the CCM, an input·select·command is used to record a source in a sink.

In such network system, based on the CCM, an internal device connection is established by a device itself and an interdevice connection is established by a sink. In this connection, the internal device connection can be controlled from the outside with a signal·source·command.

By the way, in the network system using the CCM, a source sends an input·select·command to a sink with information on an output plug of the source (hereinafter, referred to as output plug information) attached to the input·select·command. The sink establishes an interdevice connection based on the output plug information given in the received input·select·command.

In addition, in the network system, when the sink establishes an interdevice connection, the sink directly establishes the interdevice connection based on output plug information of default.

Furthermore, in the network system, when a controller which is an AV device other than sources and sinks establishes an interdevice connection, the controller sends an input·select·command to a sink with output plug information of default attached to the input·select·command. The sink establishes the interdevice connection based on the output plug information given in the received input·select·command.

By the way, in the network system adopting the CCM, auto-play processing has been developed to establish an interdevice connection between a source and a sink depending on the change of the state of the source.

Specifically, the controller makes the source register the sink by transmitting an output·preset·command to the source. If a trigger, such as the change to a replay mode, occurs in the source thereafter, the source transmits an input·select·command to the sink. The sink receives the input·select·command, and establishes an interdevice connection based on the information stored in the input·select·command.

In addition, in the network system adopting the CCM, path information notification processing by a source has been developed as a technique to establish an interdevice connection without a controller.

Specifically, when an appropriate output plug of the source is changed, the source notifies each of all registered sinks of new output plug information by transmitting an input·select·command in which the subfunction·field indicates PATH-CHANGE, to all the sinks. Each sink receives the input·select·command and establishes an interdevice connection with an appropriate input plug based on the output plug information stored in the input·select·command.

By the way, in a conventional network system adopting the CCM, an AV device other than sources operates as a controller to establish an interdevice connection using output plug of default.

In such network system, however, there may be a case where it is preferable to use a more appropriate output plug to establish an interdevice connection, not using the output plug of default.

Specifically, in such network system, an output plug may be changed from the output plug of default depending on data to be transmitted after an interdevice connection is established, and for this case, the controller should check the output plugs of the source before the interdevice connection is established.

In the conventional network system, however, since a device other than sources can not search for a more appropriate output plug of a source for establishing an interdevice connection, an interdevice connection is established using an output plug of default, resulting in the establishment of an inappropriate signal path, which is improper.

Further, in the conventional network system, even in such a state that a sink does not have an appropriate input plug at present, that is, that an interdevice connection should not be established, the sink registers a source, and if it is notified of an output plug from the source, establishes an interdevice connection using this, resulting in a waste of resource due to the interdevice connection which is not be used effectively, which is improper.

As a specific example on a case where a sink should not establish an interdevice connection, such a case is considered that a MD (Mini Disk) is now outputting content, the MD having an input means and an output means but being incapable of performing input and output at the same time. In this case, when the sink receives an input·select·command sent from a source, it establishes an interdevice connection which can not be used effectively.

### Description of the Invention

The present invention is made in consideration of the above points and proposes a signal processing system, signal output device, signal input device, and communication control method in which bus resources can be effectively used.

To solve the above problem, in the present invention, in a signal processing system which is constructed by connecting a signal output device, a signal input device and a control device to a prescribed network and in which a signal path is established between the signal output device and the signal input device in response to a request of the control device and data signals outputted from the signal output device are inputted into the signal input device through the signal path, the signal output device comprises an establishment request means for, when an establishment request signal requesting the establishment of the signal path is sent to the signal input device, transmitting the establishment request signal to the signal input device with signal path information according to a signal path inside the signal output device attached to the establishment request signal, and the signal input device comprises an establishment means for establishing the signal path between the signal output device and the signal input device based on the signal path information. As a result, a proper signal path can be established between the signal output device and the signal input device.

Further, in the present invention, in a communication control method of a signal processing system which is constructed by connecting a signal output device, a signal input device and a control device to a prescribed network and in which a signal path is established between the signal output device and the signal input device in response to a request of the control device and data signals outputted from the signal output device are inputted into the signal input device, the signal output device comprises an establishment request step of, when an establishment request signal requesting the establishment of a signal path is sent to the signal input device, sending the establishment request signal to the signal input device with signal path information according to a signal path inside the signal output device attached to the establishment request signal, and the signal input device comprises an establishment step of establishing the signal path between the signal output device and the signal input device based on the signal path information. As a result, a proper signal path can be established between the signal output device and the signal input device.

### Brief Description of the Drawings

Fig. 1 is a block diagram showing one embodiment of a network system of this invention.
Fig. 2 is a block diagram showing the construction of an STB.
Fig. 3 is a block diagram showing the construction of a VCR.
Fig. 4 is a block diagram showing the construction of a TV.
Fig. 5 is a schematic diagram explaining the network system.
Fig. 6 is a schematic diagram explaining a case of registering the VCR as a source in the TV.
Fig. 7 is a schematic diagram explaining a case of registering the TV as a sink in the VCR.
Fig. 8 is a schematic diagram explaining a case of registering an output plug in the TV.
Fig. 9 is a schematic diagram explaining a case of establishing a PtoP connection.
Fig. 10 is a schematic diagram explaining a case of canceling the PtoP connection.
Fig. 11 is a schematic diagram explaining a case of registering the VCR as a source in the TV.
Fig. 12 is a schematic diagram explaining a case of registering the TV as a sink in the VCR.
Fig. 13 is a schematic diagram explaining a case of registering an output plug in the TV.
Fig. 14 is a schematic diagram explaining a case of establishing a PtoP connection.
Fig. 15 is a schematic diagram explaining a case where the VCR starts output.
Fig. 16 is a schematic diagram explaining a case of establishing a PtoP connection.
Fig. 17 is a schematic diagram explaining source registration by the STB.
Fig. 18 is a schematic diagram explaining a case of sending a rejected·response from the VCR.
Fig. 19 is a schematic diagram explaining a case of establishing an interdevice connection.
Fig. 20 is a schematic diagram explaining a case where an interdevice connection is not established.
Fig. 21 is a schematic diagram explaining a case of establishing an interdevice connection.
Fig. 22 is a schematic diagram explaining a case of canceling the interdevice connection.
Fig. 23 is a schematic diagram explaining a case of establishing an interdevice connection again.
Fig. 24 is a flowchart showing a device selection setting processing procedure by a controller.
Fig. 25 is a flowchart showing the device selection setting processing procedure by the controller.
Fig. 26 is a flowchart showing an auto-play setting processing procedure by the controller.
Fig. 27 is a flowchart showing the auto-play setting processing procedure by the controller.
Fig. 28 is a flowchart showing a processing procedure by a source in a state where an interdevice connection should not be established.
Fig. 29 is a flowchart showing the processing procedure by the source in a state where an interdevice connection should not be established.
Fig. 30 is a flowchart showing the processing procedure by the source in a state where an interdevice connection should not be established.
Fig. 31 is a flowchart showing a processing procedure by a source in a state where an interdevice connection should be established.
Fig. 32 is a flowchart showing a processing procedure by the source in a state where an interdevice connection should be established.
Fig. 33 is a flowchart showing a processing procedure by the source in a state where an interdevice connection should be established.
Fig. 34 is a flowchart showing a processing procedure by the source in a state where an interdevice connection should be established.
Fig. 35 is a flowchart showing a processing procedure by a sink in a state where it has not selected a source and should establish an interdevice connection.
Fig. 36 is a flowchart showing a processing procedure by the sink in a state where it has not selected a source and should establish an interdevice connection.
Fig. 37 is a flowchart showing a processing procedure by the sink in a state where it has not selected a source and should establish an interdevice connection.
Fig. 38 is a flowchart showing a processing procedure by the sink in a state where it has not selected a source and should establish an interdevice connection.
Fig. 39 is a flowchart showing a processing procedure by the sink in a state where it has not selected a source and should establish an interdevice connection.
Fig. 40 is a flowchart showing a processing procedure by a sink in a state where it has not selected a source and should not establish an interdevice connection.
Fig. 41 is a flowchart showing a processing procedure by the sink in a state where it has not selected a source and should not establish an interdevice connection.
Fig. 42 is a flowchart showing a processing procedure by the sink in a state where it has not selected a source and should not establish an interdevice connection.
Fig. 43 is a flowchart showing a processing procedure by the sink in a state where it has not selected a source and should not establish an interdevice connection.
Fig. 44 is a flowchart showing a processing procedure by the sink in a state where it has not selected a source and should not establish an interdevice connection.
Fig. 45 is a flowchart showing a processing procedure by a sink in a state where it should establish an interdevice connection in a case where it has selected a source and has not established the interdevice connection.
Fig. 46 is a flowchart showing a processing procedure by the sink in a state where it should establish an interdevice connection in a case where it has selected a source and has not established the interdevice connection.
Fig. 47 is a flowchart showing a processing procedure by the sink in a state where it should establish an interdevice connection in a case where it has selected a source and has not established the interdevice connection.
Fig. 48 is a flowchart showing a processing procedure by the sink in a state where it should establish an interdevice connection in a case where it has selected a source and has not established the interdevice connection.
Fig. 49 is a flowchart showing a processing procedure by the sink in a state where it should establish an interdevice connection in a case where it has selected a source and has not established the interdevice connection.
Fig. 50 is a flowchart showing a processing procedure by a sink in a state where it should not establish an interdevice connection in a case where it has selected a source and has not established the interdevice connection.
Fig. 51 is a flowchart showing a processing procedure by the sink in a state where it should not establish an interdevice connection in a case where it has selected a source and has not established the interdevice connection.
Fig. 52 is a flowchart showing a processing procedure by the sink in a state where it should not establish an interdevice connection in a case where it has selected a source and has not established the interdevice connection.
Fig. 53 is a flowchart showing a processing procedure by the sink in a state where it should not establish an interdevice connection in a case where it has selected a source and has not established the interdevice connection.
Fig. 54 is a flowchart showing a processing procedure by the sink in a state where it should not establish an interdevice connection in a case where it has selected a source and has not established the interdevice connection.
Fig. 55 is a flowchart showing a processing procedure by a sink in a state where it has established an interdevice connection.
Fig. 56 is a flowchart showing a processing procedure by the sink in a state where it has established an interdevice connection.
Fig. 57 is a flowchart showing a processing procedure by the sink in a state where it has established an interdevice connection.
Fig. 58 is a flowchart showing a processing procedure by the sink in a state where it has established an interdevice connection.
Fig. 59 is a flowchart showing a processing procedure by the sink in a state where it has established an interdevice connection.
Fig. 60 is a flowchart showing a processing procedure by the sink in a state where it has established an interdevice connection.

### Best Mode for Carrying out the Invention

Hereinafter, one embodiment of the present invention will be described in detail with reference to attached drawings.

### (1) Construction of Network System

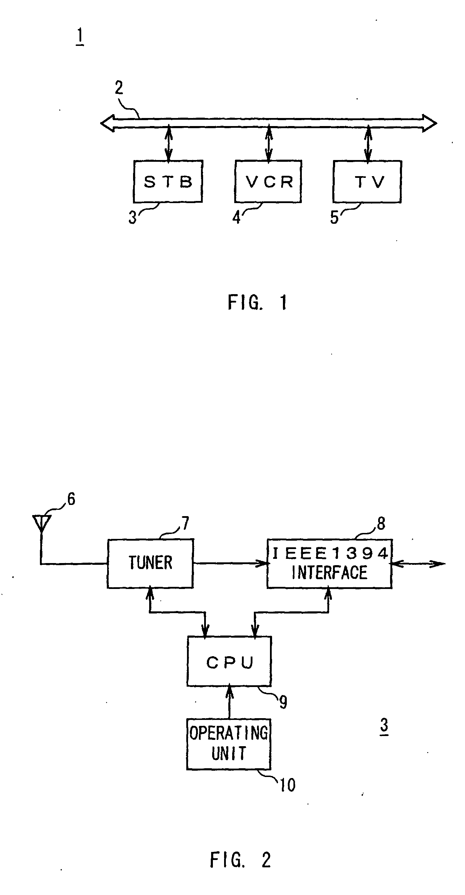

In Fig. 1, reference numeral 1 shows the construction of a network system, wherein a STB (Set Top Box) 3, a VCR (Video Casette Recorder) 4 and a TV (Television) 5 are connected to an IEEE1394 serial bus 2.

As shown in Fig. 2, the STB 3 inputs a reception signal received by an antenna 6, into a tuner 7 which then performs prescribed signal processing, and the obtained AV data is outputted to the outside via an IEEE1394 interface 8. A CPU (Central Processing Unit) 9 controls the operation of circuits composing the STB 3 according to user inputs on an operating unit 10, and transmits to and receives from the VCR 4 and the TV 5 various commands via the IEEE1394 interface 8 in accordance with software stored in an internal memory.

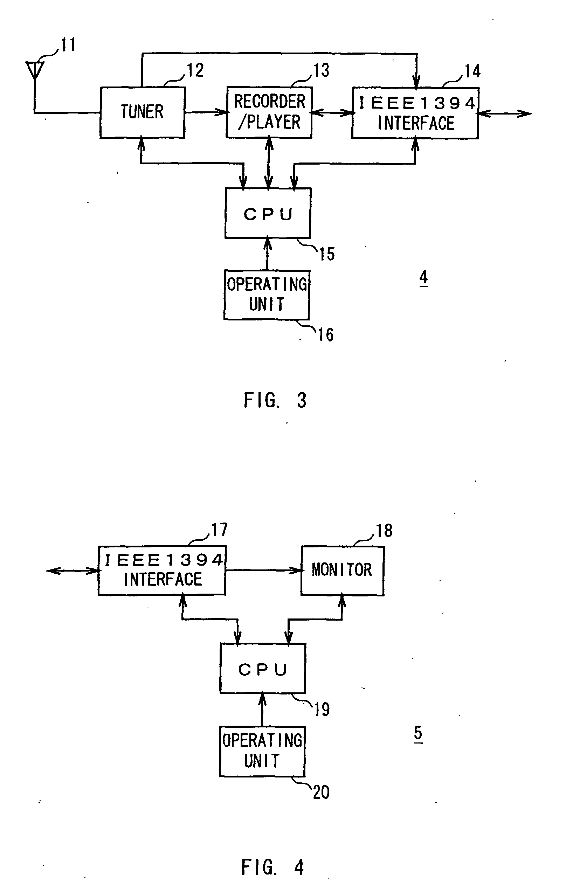

As shown in Fig. 3, the VCR 4 inputs reception signal received by an antenna 11, into a tuner 12 which then performs prescribed signal processing and AV data obtained according to necessity is outputted to a recorder/player 13 to record it on a built-in recording medium or is outputted to the outside via an IEEE1394 interface 14. In addition, when the VCR 4 receives AV data from the outside via the IEEE1394 interface 14, the AV data is outputted to the recorder/player 13 to record therein.

The recorder/player 13 reproduces AV data recorded on the recording medium according to necessity, and outputs this to the outside via the IEEE1394 interface 14. In addition, the VCR 4 outputs AV data supplied from the outside, according to necessity, via the IEEE1394 interface 14 to the outside as it is.

The CPU 15 controls the operation of circuits composing the VCR 4 according to user inputs on an operating unit 16, and in addition, transmits to and receives from the STB 3 and the TV 5 various commands via the IEEE1394 interface 14 in accordance with software stored in an internal memory.

As shown in Fig. 4, the TV 5 outputs AV data received via the IEEE1394 interface 17 from the outside, to a monitor 18 to display thereon. A CPU 19 controls the operation of circuits composing the TV 5 in response to user inputs on an operating unit 20, and in addition, transmits to and receives from the STB 3 and the VCR 4 various commands via an IEEE1394 interface 17 in accordance with software stored in an internal memory.

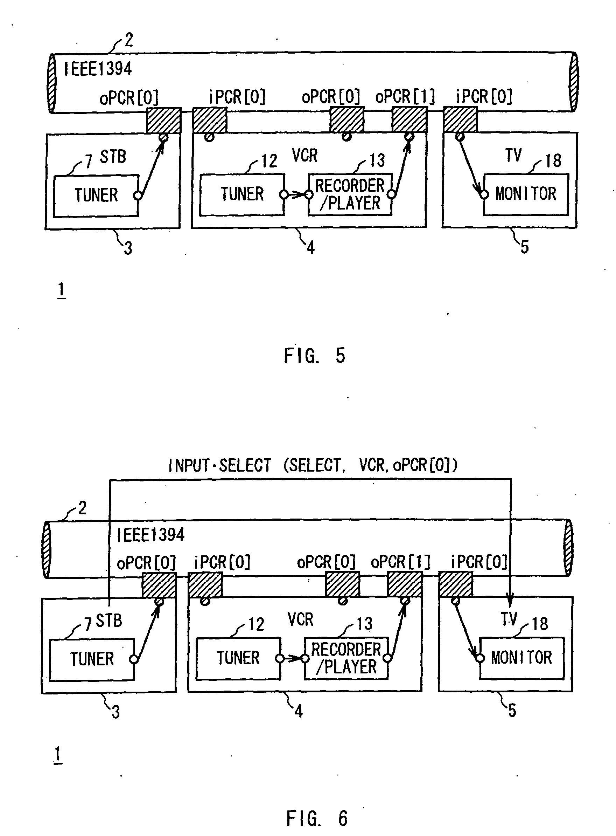

Now, the functional construction of the network system 1 is shown in Fig. 5 where the same reference numerals are applied to parts corresponding to those of Fig. 1 to Fig. 4. In the network system 1, as shown in Fig. 5, as to PCR, the STB 3 is provided with oPCR[0] for output, the VCR 4 is provided with iPCR[0] for input and oPCR[0] and oPCR[1] for output, and the TV 5 is provided with iPCR[0] for input.

### (2) Establishment of Interdevice Connection According to Signal Path inside Source

In this embodiment, the STB 3 operates as a controller and performs device selection processing to set a combination of sink and source, and thereby sets the VCR 4 as a source and the TV 5 as a sink.

First, the STB 3 serving as the controller registers the VCR 4 as a source in the TV 5 as shown in Fig. 6. Specifically, the STB 3 serving as the controller sends an input·select·command to the TV 5. In this connection, the STB 3 serving as the controller specifies SELECT in the subfunction (subfunction) field of the input·select·command, specifies the node ID of the VCR 4 in the node ID (node_ID) field, and specifies an output plug number of default in the output·plug (output_plug) field. In this connection, the output plug number of default can be freely set by the STB 3 serving as the controller.

When the TV 5 receives this input·select·command, it registers the specified node ID, that is, the VCR 4 as the source.

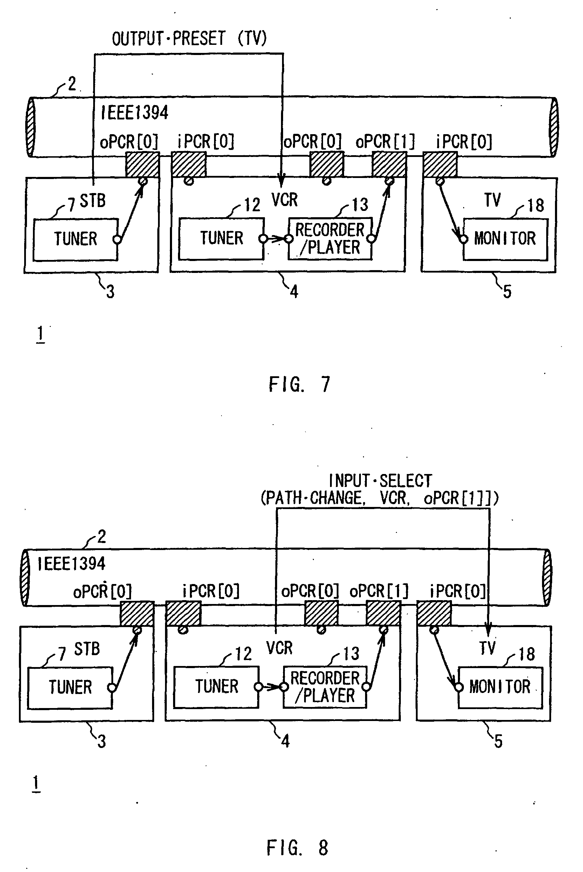

Next, the STB 3 serving as the controller registers the TV 5 as a sink in the VCR 4 as shown in Fig. 7. Specifically, the STB 3 serving as the controller sends an output·preset·command to the VCR 4. In this case, the STB 3 serving as the controller specifies the node ID of the TV 5 in the destination·nodeID (destination_node_ID) field of the output·preset·command.

When the VCR 4 serving as the source receives this output·preset·command, it sends an input·select·command to the TV 5 having the specified node ID as shown in Fig. 8. In this case, the VCR 4 serving as the source specifies PATH·CHANGE in the subfunction·field of the input·select·command, specifies the node ID of the VCR 4 itself in the nodeID·field, and specifies an appropriate output plug based on a signal path inside the VCR 4, in the output·plug·field.

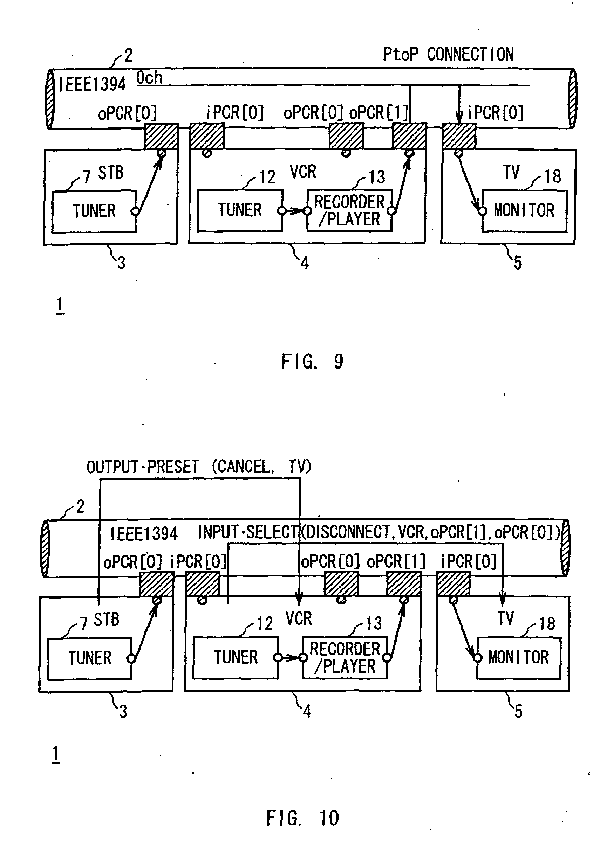

Sequentially, when the TV 5 serving as the sink receives this input·select·command, it establishes an interdevice connection based on the output plug information attached to the input·select·command received, as shown in Fig. 9.

Specifically, the TV 5 serving as the sink establishes a PtoP connection between the output plug oPCR[1], stored in the output·plug·field, of the VCR 4 specified by the node·ID stored in the nodeID·field of the received input·select·command and an appropriate input plug iPCR[0] of the TV 5.

When the STB 3 serving as the controller cancels the interdevice connection between the TV 5 serving as the sink and the VCR 4 serving as the source thereafter, it sends an output·preset·command indicative of cancellation to the VCR 4 serving as the source as shown in Fig. 10. Specifically, the STB 3 serving as the controller sends the command with a value included in a response received at the time of registration, stored in the preset·entry·number (preset_entry_number) field of the output·preset·command and with FFFF stored in the destination·nodeID·field and the signal·destination (signal_destination) field.

When the VCR 4 serving as the source receives this output·preset·command, it cancels the registration of the sink. Then the VCR 4 serving as the source checks own registration state to see if the TV 5 serving as the sink of which the cancellation is requested is registered in the other controllers or the VCR 4 itself, and if it is found from the result that the registration of the TV 5 has been all cancelled, then the VCR 4 sends an input·select·command with DISCONNECT specified in the subfunction·field to the TV 5 serving as the sink.

When the TV 5 serving as the sink receives this input·select·command, it cancels the interdevice connection with the VCR 4 serving as the source.

### (3) Device Selection Processing

Sequentially, in this embodiment, the STB 3 operates as a controller, and performs device selection processing to logically connect an appropriate output plug of a source and an appropriate input plug of a sink corresponding to the output plug of the source, so as to set the VCR 4 as the source and set the TV 5 as the sink.

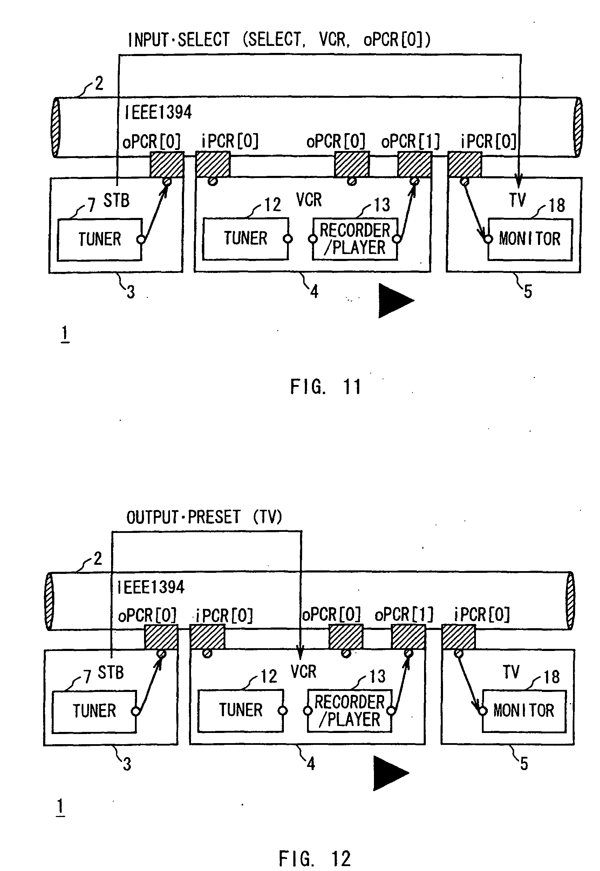

First, the STB 3 serving as the controller registers the VCR 4 as a source in the TV 5 as shown in Fig. 11. Specifically, the STB 3 serving as the controller sends an input·select·command to the TV 5. In this case, the STB 3 serving as the controller specifies SELECT in the subfunction·field of the input·select·command, specifies the node ID of the VCR 4 in the nodeID·field, and specifies an output plug number of default in the output·plug·field. In this connection, the output plug number of default can be set freely by the STB 3 serving as the controller.

When the TV 5 receives this input·select·command, it registers the specified node ID, i.e., the VCR 4 as a source.

Next, the STB 3 serving as the controller registers the TV 5 as a sink in the VCR 4 as shown in Fig. 12. Specifically, the STB 3 serving as the controller sends an output·preset·command to the VCR 4. In this case, the STB 3 serving as the controller specifies the node ID of the TV 5 in the destination·nodeID·field of the output·preset·command.

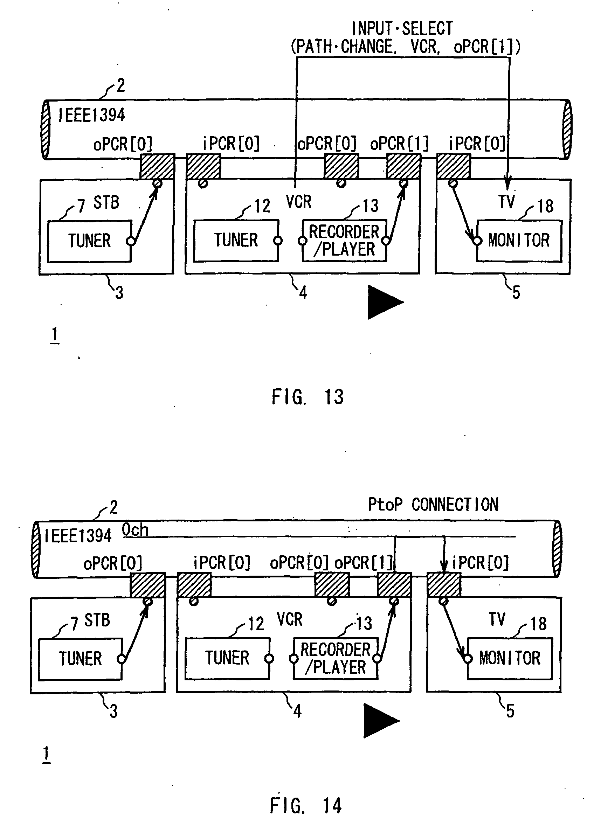

When the VCR 4 serving as the source receives this output·preset·command, it judges whether to establish an interdevice connection now. If the VCR 4 serving as the source judges from the result that the VCR 4 is now, for example, performing playback operation and so is in a state where an interdevice connection should be established now, it sends an input·select·command to the TV 5 having the specified node ID as shown in Fig. 13. In this case, the VCR 4 serving as the source specifies PATH·CHANGE in the subfunction·field of the input·select·command, specifies the node ID of the VCR 4 itself in the nodeID·field, and specifies an appropriate output plug based on a signal path inside the VCR 4 in the output·plug·field.

Sequentially, when the TV 5 serving as the sink receives this input·select·command, it judges based on the output plug information attached to the input·select·command given whether to establish an interdevice connection. If the TV 5 serving as the sink judges from the result that it should establish an interdevice connection now, it establishes the interdevice connection based on the output plug information attached to the input·select·command given, as shown in Fig. 14.

That is, the TV 5 serving as the sink establishes a PtoP connection between the output plug oPCR[1], stored in the output·plug·field, of the VCR 4 specified by the node ID stored in the nodeID·field of the received input·select·command and the appropriate input plug iPCR[0] of the TV 5.

If the TV 5 serving as the sink judges that it should not establish the interdevice connection now, on the contrary, it only registers the output plug oPCR[1] stored in the output·plug·field of the received input·select·command without establishing the interdevice connection, and in this case, sends a rejected·response to the VCR 4 serving as the source.

When the TV 5 serving as the sink judges that its state is changed to the one where it should establish the interdevice connection thereafter, it establishes the interdevice connection based on the output plug information of the VCR 4 registered as the source.

By the way, in the case where the VCR 4 serving as the source receives the output·preset·command and judges that it is in a state where it should not establish the interdevice connection now, it only registers the TV 5 as a sink and does not send the input·select·command to the TV 5 serving as the sink.

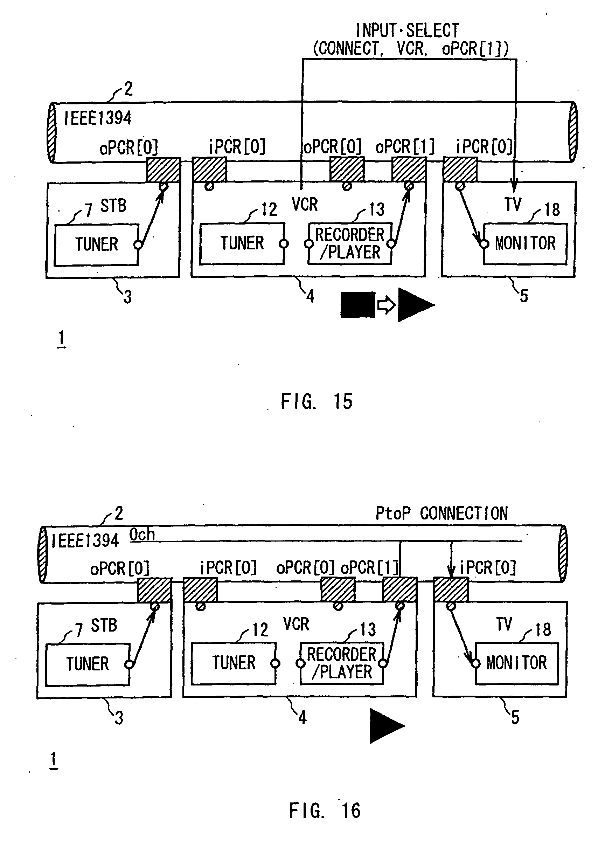

When the VCR 4 serving as the source judges that the VCR 4 has started output of AV data and its state is changed to the one where it should establish an interdevice connection thereafter, it sends an input·select·command to the TV 5 registered as the sink as shown in Fig. 15. In this case, the VCR 4 serving as the source specifies CONNECT in the subfunction·field of the input·select·command, and specifies an appropriate output plug based on a signal path inside the VCR 4 in the output-plug-field.

Sequentially, when the TV 5 serving as the sink receives this input·select·command, it judges whether to establish an interdevice connection now. If the TV 5 serving as the sink judges from the result that it should establish an interdevice connection now, it establishes the interdevice connection based on the output plug information attached to the input·select·command given, as shown in Fig. 16.

Specifically, the TV 5 serving as the sink establishes a PtoP connection between the output plug oPCR[1], stored in the output·plug·field, of the VCR 4 specified by the node ID stored in the nodeID·field of the received input·select·command and the appropriate input plug iPCR[0] of the TV 5.

If the TV 5 serving as the sink judges that it should not establish an interdevice connection now, on the contrary, it only registers the output plug oPCR[1] stored in the output·plug·field of the received input·select·command without establishing the interdevice connection, and in this case, it sends a rejected-response to the VCR 4 serving as the source.

When the TV 5 serving as the sink judges that its state is changed to the one where it should establish an interdevice connection thereafter, it establishes an interdevice connection based on the output plug information of the VCR 4 registered as the source.

By the way, in the aforementioned case where the VCR 4 serving as the source is in a state where an interdevice connection should be established now and have sent an input·select·command to the TV 5 serving as the sink but the TV 5 is in a state where it should not establish the interdevice connection now, the VCR 4 receives a rejected-response from the TV 5. In addition, in the case where the VCR 4 serving as the source has registered the TV 5 as a sink and is in a state where an interdevice connection should not be established now, it does not send an input·select·command.

In such cases, the VCR 4 serving as the source can not know which input plug of the TV 5 serving as the sink the TV 5 used to perform the source registration.

Therefore, under this state, when the VCR 4 serving as the source receives an output·preset·command indicative of cancellation of sink registration from the STB 3 serving as the controller, it generally sends to the TV 5 serving as the sink an input·select·command of which the subfunction·field is DISCONNECT.

However, if the VCR 4 serving as the source has not received an accepted·response from the TV 5 serving as the sink in response to the input·select·command, it can not know which input plug the TV 5 serving as the sink used to perform the source registration, and in this case, it can not send the input·select·command because it can not specify a plug to be stored in the input·plug·field of the input·select·command.

As a method of avoiding such inconvenience, there is such a method that the VCR 4 serving as the source checks which input plug the TV 5 serving as the sink is using to perform the source registration. Specifically, the VCR 4 serving as the source searches the input plugs of the TV 5 serving as the sink using a plug·info (PLUG INFO) command which is provided under the AV/C general (AV/C General).

The VCR 4 serving as the source sends to each of the obtained input plugs a status (STATUS) command of the input·select·command specifying the respective input plug, thereby knowing a source being selected by each input plug of the TV 5 serving as the sink or exist or absent of selection.

Then, when the VCR 4 serving as the source finds an input plug which selects the VCR 4 as the source, it sends an input·select·command having DISCONNECT in the subfunction with specifying the input plug. When the VCR 4 can not find an input plug which selects the VCR 4 as the source, on the contrary, it can not send an input·select·command having DISCONNECT in the subfunction, but there is no inconvenience because it is not necessary for the TV 5 serving as the sink to cancel registration.

In addition, as a method to avoid the above inconvenience, there is such a method that the VCR 4 serving as the source does not send an input·select·command having DISCONNECT in the subfunction if it does not receive an accepted·response from the TV 5 serving as the sink in response to an input·select·command even once.

In this case, the TV 5 serving as the sink remains the source registration. However, since the sink registration in the VCR 4 serving as the source gives priority to earlier registrations, if the number of registrations excesses the maximum number of registrations decided by the device, the following registrations are rejected. On the other hand, since the source registration in the TV 5 serving as the sink gives priority to latter registrations, unnecessary source registrations remain in the TV 5 serving as the sink, and the following source registrations by other controllers in the TV 5 serving as the sink do not cause any inconvenience.

Now, explanation will be made on a case where a device establishes an interdevice connection based on a source registration in the case where it performs only the source registration in an output state and then its state is changed to an input capable state from the output state, the device being capable of carrying out input processing and output processing but incapable of carrying out them at the same time.

In this description, it is assumed that the VCR 4 is a device which can carry out input processing and output processing but can not carry out them at the same time, the TV 5 is a controller and sink operating as a controller and sink, and the STB 3 is a controller and source operating as a controller and source.

First, the TV 5 operates as the controller and performs the device selection processing to thereby set the VCR 4 as a source and set the TV 5 as a sink, and when the VCR 4 serving as the source starts playback operation, it establishes an interdevice connection as shown in Fig. 16.

At this time, the STB 3, according to user operation, operates as the controller and performs the device selection processing, so as to thereby set the STB 3 as the source and the VCR 4 as the sink.

Specifically, the STB 3 serving as the controller sends an input·select·command having SELECT in the subfunction to the VCR 4 while the VCR 4 is performing playback operation. When the VCR 4 receives this input·select·command, it registers the STB 3 as a source. Sequentially, in the STB 3, the functional blocks operating as the controller register the VCR 4 as'a sink in the functional blocks operating as the source.

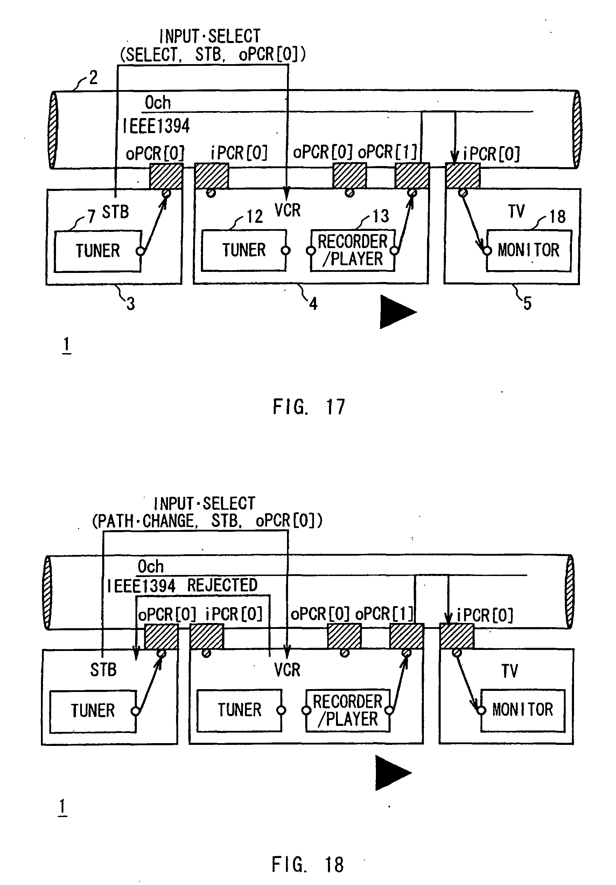

Then, the STB 3 operating as the source sends an input·select·command having PATH·CHANGE in the subfunction to the VCR 4 being in an output state as shown in Fig. 18.

Since the VCR 4 operating as the sink can not perform input operation because it is now performing output operation, it can not use an interdevice connection effectively even the interdevice connection is established, and therefore bus resources can not be used effectively. In such a case, the interdevice connection should not be established.

Therefore, the VCR 4 operating as the sink sends a rejected-response to the STB 3 as shown in Fig. 18. In this case, the VCR 4 stores the output plug information of the STB 3 stored in the output-field of the input·select·command.

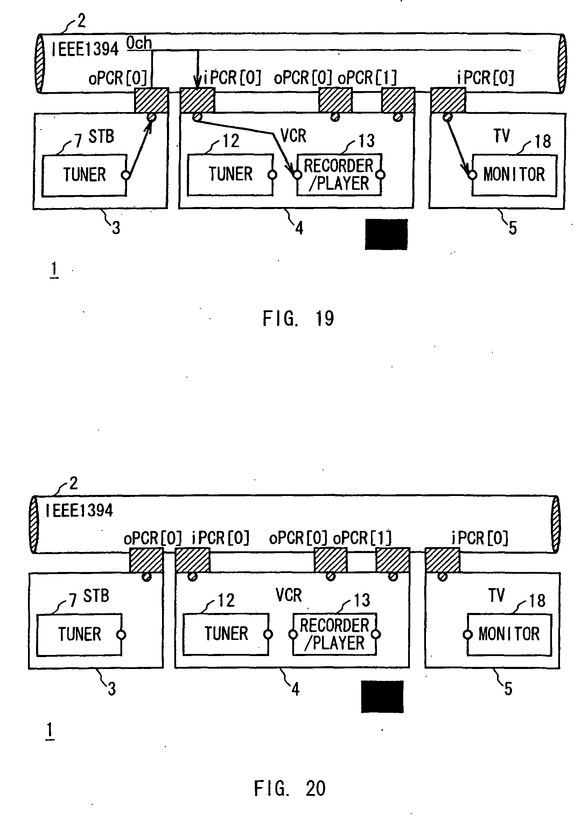

When the VCR 4 operating as the sink finishes the playback operation thereafter, it establishes an interdevice connection with the STB 3 based on the stored source registration as shown in Fig. 19. In this connection, the VCR 4 can establish an appropriate interdevice connection by using the output plug information stored for the output plug of the STB 3.

### (4) Cancellation of Interdevice Connection by Sink

In this section, concrete explanation will be made on a case where the STB 3 operates as a controller to set the VCR 4 as a source and set the TV 5 as a sink, an interdevice connection is established by the playback operation of the VCR 4 serving as the source and the interdevice connection is cancelled by the stop operation of the VCR 4.

First, the STB 3 serving as the controller sets the VCR 4 as the source and sets the TV 5 as the sink, and the VCR 4 serving as the source does not send an input·select·command to the TV 5 serving as the sink during the cessation of output, thereby the TV 5 serving as the sink does not establish an interdevice connection, as shown in Fig. 20.

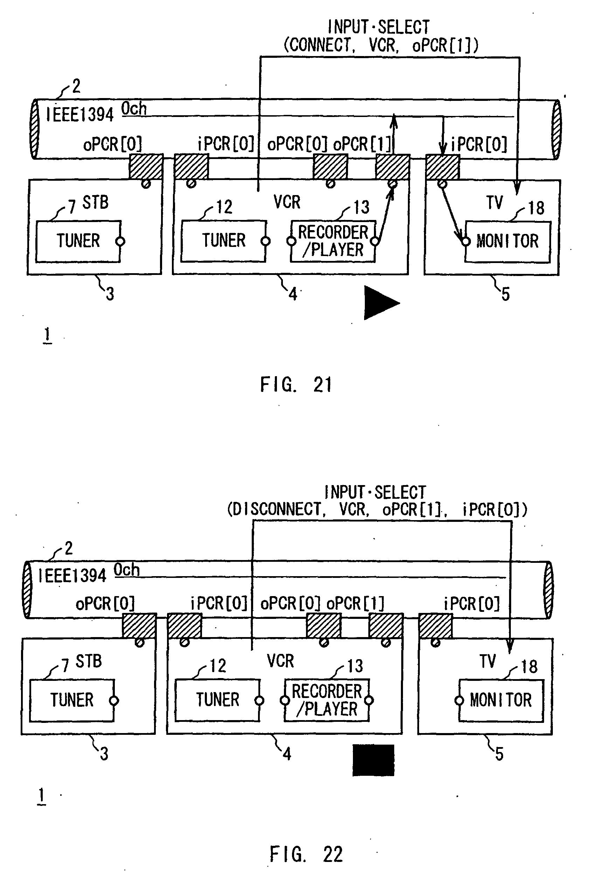

When the VCR 4 serving as the source is changed from the above state to a playback mode, it performs auto-play processing to decide an output plug oPCR [1] and then send an input·select·command having CONNECT in the subfunction to the TV 5 serving as the sink as shown in Fig. 21. When the TV 5 serving as the sink receives this input·select·command, it establishes an interdevice connection with the VCR 4. At this time, the VCR 4 serving as the source receives a response sent from the TV 5, and founds the input plug iPCR[0] being used for the interdevice connection, from the input·plug·field of the response.

When the VCR 4 serving as the source is changed to a stopping state thereafter, it requests the TV 5 serving as the sink for the cancellation of the interdevice connection to save the bus resources for no AV data to be transmitted. Specifically, the VCR 4 transmits an input·select·command with DISCONNECT specified in the subfunction·field, oPCR[1] specified in the output·plug·field, and iPCR[0] specified in the input·plug·field.

In this case, since STB 3 serving as the controller does not cancel the setting for the auto-play processing, the VCR 4 serving as the source is not allowed to cancel the sink registration in the VCR 4 itself even the interdevice connection becomes unnecessary, and therefore the sink registration is not changed.

When the TV 5 serving as the sink receives the input·select·command from the VCR 4 serving as the source, it cancels the interdevice connection.

There are two cases for the reception of the input·select·command with DISCONNECT in the subfunction·field: one is that the VCR 4 serving as the source does not need the interdevice connection; and the other is that the sink registration is cancelled in the VCR 4 serving as the source for the STB 3 serving as the controller. The TV 5 serving as the sink cancels the source registration without judging which case the input·select·command was received for.

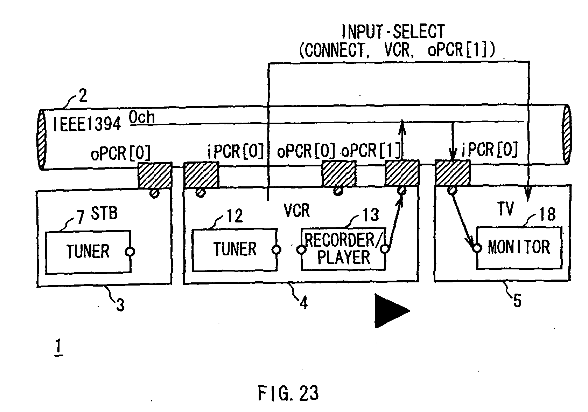

When such a case arise that the VCR 4 serving as the source needs the establishment of an interdevice connection with the TV 5 serving as the sink thereafter, the VCR 4 carries out the auto-play processing to send an input-select-command with CONNECT in the subfunction·field as shown in Fig. 23, not path information notification processing to send an input·select·command with PATH·CHANGE in the subfunction·field.

Therefore, in the case where the TV 5 serving as the sink cancels the source registration but then the VCR 4 serving as the source starts output again, the TV 5 can carry out the usual auto-play processing to perform the source registration and establish an interdevice connection, thus any inconvenience due to the cancellation of source registration does not occur.

### (5) Processing Procedures for Controller, Source, and Sink

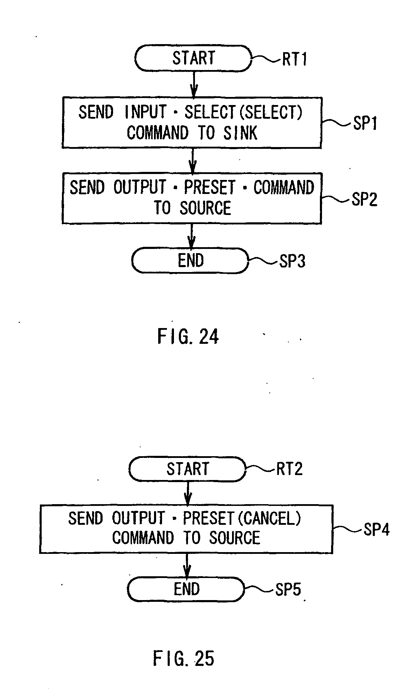

Now, Fig. 24 shows the device selection setting processing procedure RT1 by the STB 3 serving as the controller. The STB 3 serving as the controller starts the device selection setting processing procedure RT1 in Fig. 24, and then sends an input·select·command with SELECT specified in the subfunction·field to the TV 5 serving as the sink at step SP1.

The STB 3 serving as the controller moves on to next step SP2 where it sends an output·preset·command to the VCR 4 serving as the source to establish an interdevice connection, and then moves on to step SP3 where the processing procedure RT1 is completed.

When the interdevice connection is cancelled thereafter, the STB 3 serving as the controller performs the device selection setting processing procedure RT2 shown in Fig. 25. The STB 3 serving as the controller starts the device selection setting processing procedure RT2 in Fig. 25, sends an output·preset·command indicative of cancellation to the VCR 4 serving as the source at step SP4 to cancel the interdevice connection, and then moves on to step SP5 where this processing procedure RT2 is completed.

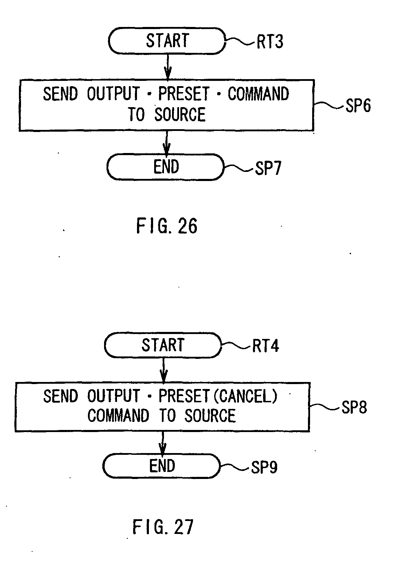

Further, Fig. 26 shows the auto-play setting processing procedure RT3 which is performed by the STB 3 serving as the controller. Specifically, the STB 3 serving as the controller starts the auto-play setting processing procedure RT3 in Fig. 26, sends an output·preset·command to the VCR 4 serving as the source at step SP6 to perform the auto-play setting, and then moves on to step SP7 where this processing procedure RT3 is completed.

When the STB 3 serving as the controller cancels the auto-play setting thereafter, it carries out the auto-play setting processing procedure RT4 shown in Fig. 27. The STB 3 serving as the controller starts the auto-play setting processing procedure RT4 in Fig. 27, moves on to step SP8 where it sends an output·preset·command indicative of cancellation to the VCR 4 serving as the source to cancel the auto-play setting, and then moves on to step SP9 where this processing procedure RT4 is completed.

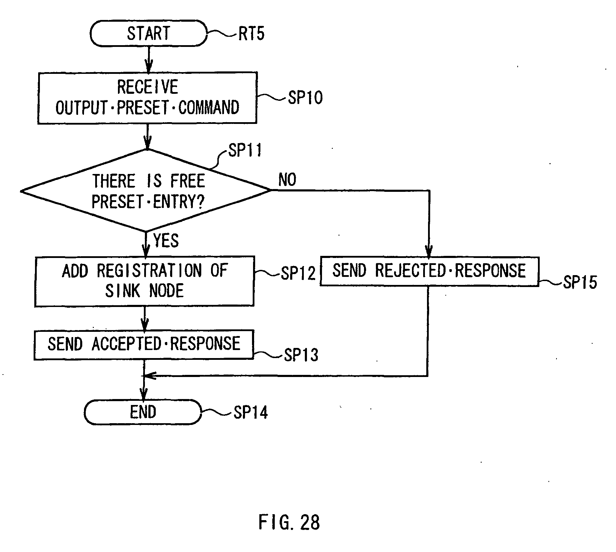

Now, Fig. 28 to Fig. 30 show processing procedures RT5 to RT7 which are carried out by the VCR 4 serving as the source in a state where the VCR 4 serving as the source is in a state where an interdevice connection should not be established. In this case, when an output·preset·command is sent from the STB 3 serving as the controller, the VCR 4 serving as the source carries out the processing procedure RT5 shown in Fig. 28. Specifically, in this Fig. 28, the VCR 4 serving as the source starts the processing procedure RT5, and when it receives the output·preset·command at step SP10, it moves on to next step SP11 where it judges whether there is free preset·entry (PRESET ENTRY).

An affirmative result at step SP11 means that there is free preset·entry, and in this case, the VCR 4 serving as the source moves on to step SP12 where it adds the registration of the sink node. Then, the VCR 4 serving as the source sends an accepted·response to the STB 3 serving as the controller at step SP13, and moves on to next step SP14 where the processing procedure RT5 is completed.

A negative result at step SP11, on the contrary, means that there is no free preset·entry, and in this case, the VCR 4 serving as the source moves on to step SP15 where it sends a rejected·response to the STB 3 serving as the controller and then moves to next step SP14 where the processing procedure RT5 is completed.

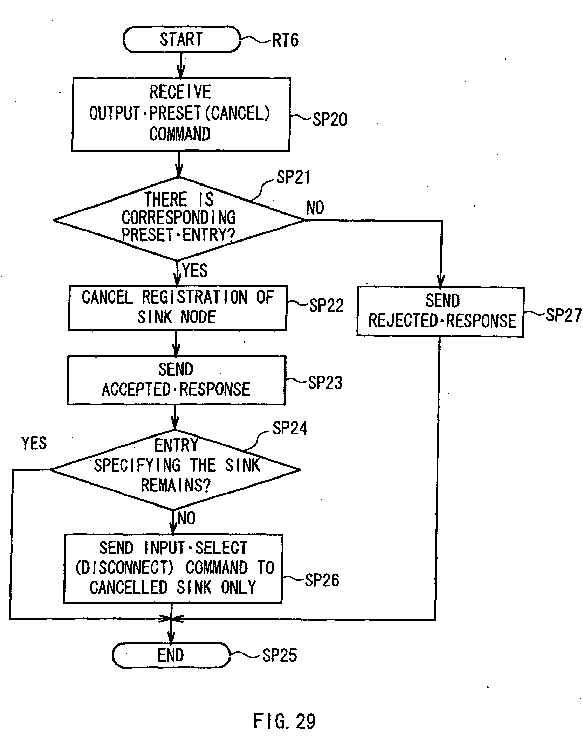

On the other hand, when an output·preset·command indicative of cancellation is sent from the STB 3 serving as the controller, the VCR 4 serving as the source carries out the processing procedure RT6 shown in Fig. 29. Specifically, the VCR 4 serving as the source starts the processing procedure RT6 in Fig. 29, moves on to next step SP21 where it judges whether there is the corresponding preset·entry.

An affirmative result at step SP21 means that there is the corresponding preset·entry, and in this case, the VCR 4 serving as the source moves on to step SP22 where the registration of the sink node is cancelled. Then, the VCR 4 serving as the source sends an accepted·response to the STB 3 serving as the controller at step SP23, and moves on to next step SP24 where it judges whether an entry specifying the TV 5 serving as the sink remains.

An affirmative result at step SP24 means that an entry specifying the TV 5 serving as the sink remains, and in this case, the VCR 4 serving as the source moves on to step SP25 where the processing procedure RT6 is completed.

A negative result at step SP24, on the contrary, means that no entry specifying the TV 5 serving as the sink remains, and in this case, the VCR 4 serving as the source moves on to step SP26 where it sends an input·select·command with DISCONNECT specified in the subfunction to the TV 5 serving as the deleted sink only, and moves on to step SP25 where the processing procedure RT6 is completed.

By the way, a negative result at step SP21 means that there is no corresponding preset-entry, and in this case, the VCR 4 serving as the source sends a rejected-response to the STB 3 serving as the controller at step SP27, and moves on to step SP25 where the processing procedure RT6 is completed.

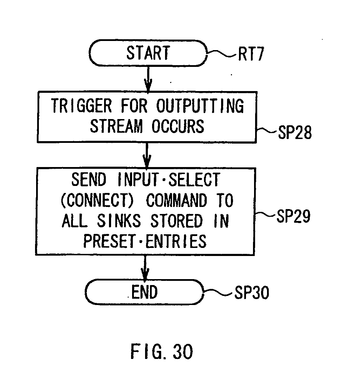

Further, the VCR 4 serving as the source carries out the processing procedure RT7 shown in Fig. 30 when a trigger such as the start of output of AV data occurs. Specifically, the VCR 4 serving as the source starts the processing procedure RT7 in Fig. 30, determines at step SP28 that the trigger such as the start of output of AV data has occurred, moves on to next step SP29 where it sends an input·select·command with CONNECT specified in the subfunction to all sinks stored in the preset·entries, and then moves on to step SP30 where the processing procedure RT7 is completed.

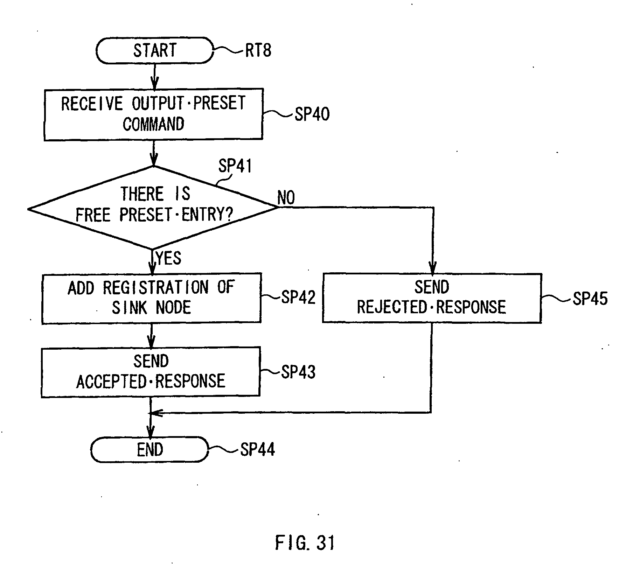

Now, Fig. 31 to Fig. 34 show processing procedures RT8 to RT11 which are performed by the VCR 4 serving as the source in a state where an interdevice connection should be established. In this case, when an output·preset·command is sent from the STB 3 serving as the controller, the VCR 4 serving as the source starts the processing procedure RT8 shown in Fig. 31. Specifically, the VCR 4 serving as the source starts the processing procedure RT8 in Fig. 31, receives the output·preset·command at step SP40, and then moves on to next step SP41 where it judges whether there is free preset-entry.

An affirmative result at step SP41 means that there is free preset-entry, and in this case, the VCR 4 serving as the source moves on to step SP42 where it adds the registration of the sink node. Then, the VCR 4 serving as the source sends an accepted-response to the STB 3 serving as the controller at step SP43, and moves on to next step SP44 where the processing procedure RT18 is completed.

A negative result at step SP41, on the contrary, means that there is no free preset·entry, and in this case, the VCR 4 serving as the source sends a rejected·response to the STB 3 serving as the controller at step SP45, and moves on to next step SP44 where the processing procedure RT8 is completed.

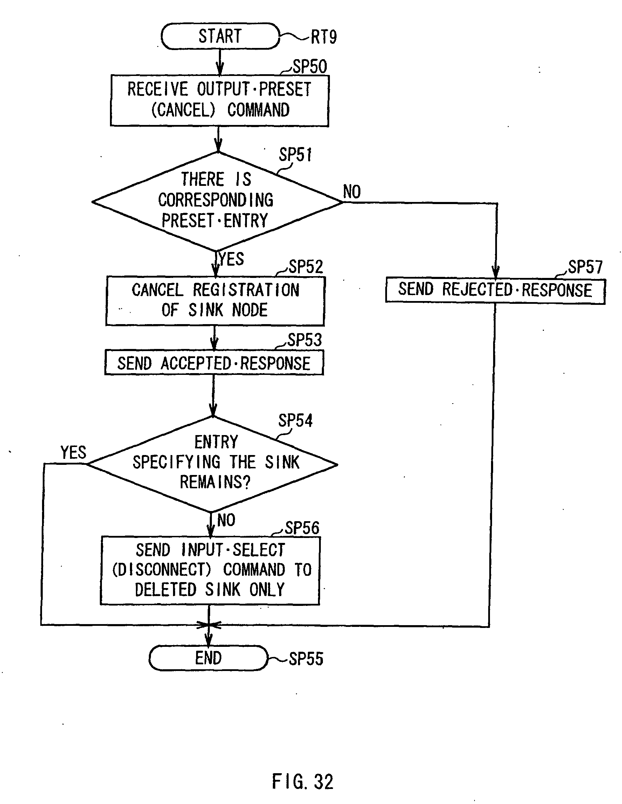

On the other hand, when an output·preset·command indicative of cancellation is sent from the STB 3 serving as the controller, the VCR 4 serving as the source carries out the processing procedure RT9 shown in Fig. 32. Specifically, the VCR 4 serving as the source starts the processing procedure RT9 in Fig. 32, receives the output·preset·command indicative of cancellation at step SP50, and then moves on to next step SP51 where it judges whether there is the corresponding preset·entry.

An affirmative result at step SP51 means that there is the corresponding preset·entry, and in this case, the VCR 4 serving as the source moves on to step SP52 where it cancels the registration of the sink node. Then the VCR 4 serving as the source sends an accepted·response to the STB 3 serving as the controller at step SP53, and moves on to next step SP54 where it judges whether an entry specifying the TV 5 as the sink remains.

An affirmative result at step SP54 means that an entry specifying the TV 5 serving as the sink remains, and in this case, the VCR 4 serving as the source moves on to step SP55 where the processing procedure RT9 is completed.

A negative result at step SP54, on the contrary, means that no entry specifying the TV 5 serving as the sink remains, and in this case, the VCR 4 serving as the source moves on to step SP56 where it sends an input·select·command with DISCONNECT specified in the subfunction to the TV serving as the sink deleted only, and moves on to step SP55 where the processing procedure RT9 is completed.

By the way, a negative result at step SP51 means that there is no corresponding preset·entry, and in this case, the VCR 4 serving as the source moves on to step SP57 where it sends a rejected·response to the STB 3 serving as the controller, and moves on to step SP55 where the processing procedure RT9 is completed.

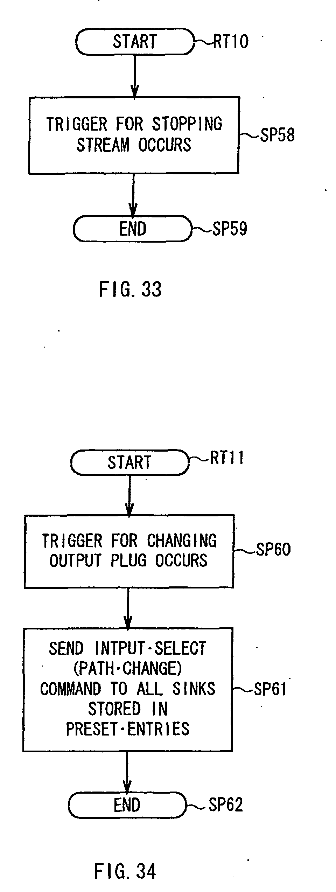

Further, when such a trigger as to stop outputting AV data occurs, the VCR 4 serving as the source performs the processing procedure RT10 shown in Fig. 33. Specifically, the VCR 4 serving as the source starts the processing procedure RT10 in Fig. 33, determines at step SP58 that such trigger as to stop outputting AV data has occurred, and after stopping the output of AV data, moves on to next step SP59 where the processing procedure RT10 is completed.

Furthermore, when such a trigger as to change an output plug occurs, the VCR 4 serving as the source carries out the processing procedure RT11 shown in Fig. 34. Specifically, the VCR 4 serving as the source starts the processing procedure RT11 in Fig. 34, determines at step SP60 that such trigger as to change an output plug has occurred, moves on to next step SP61 whether it sends an input·select·command with PATH-CHANGE specified in the subfunction to all sinks stored in the preset·entries, and moves on to step SP62 where the processing procedure RT11 is completed.

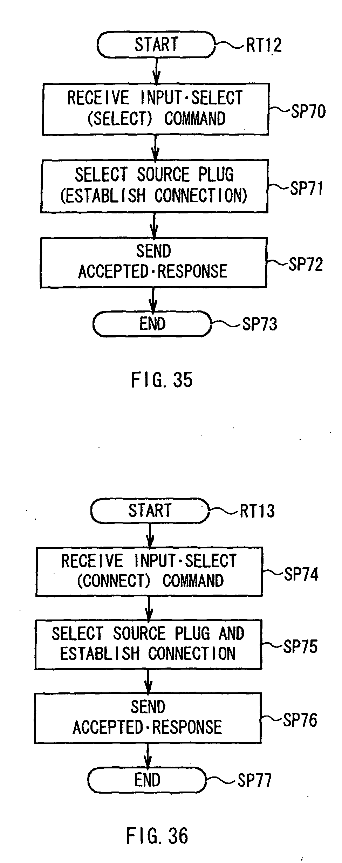

Now, Fig. 35 to Fig. 39 show processing procedure RT12 to RT16 which are performed by the TV 5 serving as the sink in a state where it has not selected a source and should establish an interdevice connection. In this case, when an input·select·command with SELECT specified in the subfunction is sent, the TV 5 serving as the sink performs the processing procedure RT12 shown in Fig. 35. Specifically, the TV 5 serving as the sink starts the processing procedure RT12 in Fig. 35, receives the input·select·command with SELECT specified in the subfunction at step SP70, moves on to next step SP71 where it selects the source plug or establishes an interdevice connection after selecting the source plug.

Then, the TV 5 serving as the sink sends an accepted·response at step SP72, and moves on to step SP73 where the processing procedure RT12 is completed.

Further, when an input·select·command with CONNECT specified in the subfunction is sent, the TV 5 serving as the sink performs the processing procedure RT13 shown in Fig. 36. Specifically, the TV 5 serving as the sink starts the processing procedure RT13 in Fig. 36, receives the input·select·command with CONNECT specified in the subfunction at step SP74, and moves on to next step SP75 where it selects the source plug and then establishes an interdevice connection.

Then, the TV 5 serving as the sink sends an accepted·response at step SP76, and moves on to step SP77 where the processing procedure RT13 is completed.

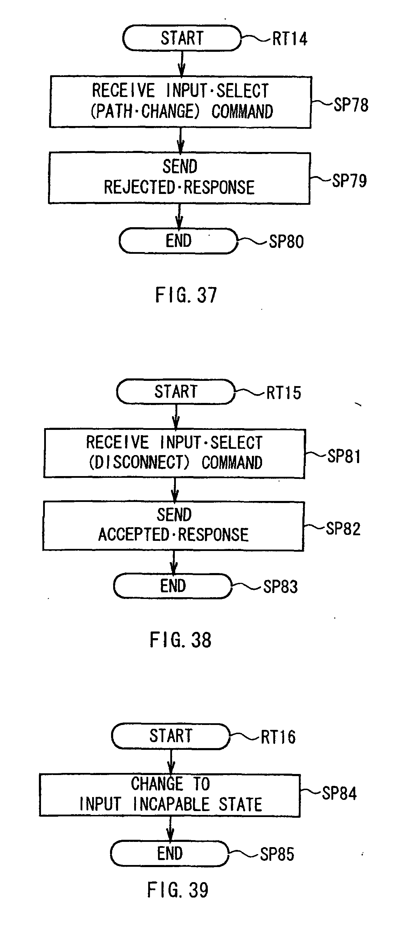

Further, when an input·select·command with PATH·CHANGE specified in the subfunction is sent, the TV 5 serving as the sink starts the processing procedure RT14 shown in Fig. 37. Specifically, the TV 5 serving as the sink starts the processing procedure RT14 in Fig. 37, receives the input·select·command with PATH·CHANGE specified in the subfunction at step SP78, moves on to next step SP79 where it sends a rejected·response, and moves on to step SP80 where the processing procedure RT14 is completed.

Further, when an input·select·command with DISCONNECT specified in the subfunction is sent, the TV 5 serving as the sink carries out the processing procedure RT15 shown in Fig. 38. Specifically, the TV 5 serving as the sink starts the processing procedure RT15 in Fig. 38, receives the input·select·command with DISCONNECT specified in the subfunction at step SP81, moves on to next step SP82 where it sends an accepted·response, and then moves on to step SP83 where the processing procedure RT15 is completed.

Further, in the case where the TV 5 serving as the sink changes to an input incapable state, it carries out the processing procedure RT16 shown in Fig. 39. Specifically, the TV 5 serving as the sink starts the processing procedure RT16 in Fig. 39, changes to an input incapable state at step SP84, and moves on to step SP85 where the processing procedure RT16 is completed.

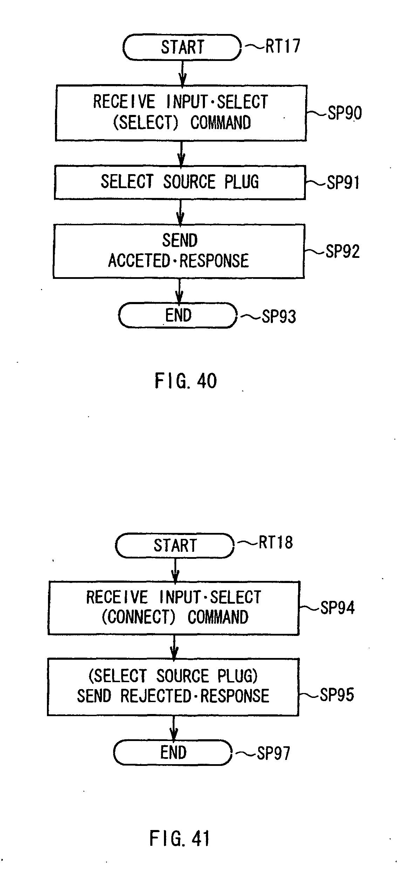

Now, Fig. 40 to Fig. 44 show processing procedures RT17 to RT21 which are performed by the TV 5 serving as the sink in a state where it has not selected a source and should not establish an interdevice connection. In this case, when an input·select·command with SELECT specified in the subfunction is sent, the TV 5 serving as the sink carries out the processing procedure RT17 shown in Fig. 40. Specifically, the TV 5 serving as the sink starts the processing procedure RT17 in Fig. 40, receives the input·select·command with SELECT specified in the subfunction at step SP90, and moves on to next step SP91 where it selects the source plug.

Then, the TV 5 serving as the sink sends an accepted·response at step SP92 and then moves on to step SP93 where the processing procedure RT17 is completed.

Further, when an input·select·command with CONNECT specified in the subfunction is sent, the TV 5 serving as the sink carries out the processing procedure RT18 shown in Fig. 41. Specifically, the TV 5 serving as the sink starts the processing procedure RT18 in Fig. 41, receives the input·select·command with CONNECT specified in the subfunction at step SP94, moves on to next step SP95 where it sends a rejected·response, or sends a rejected response after selecting the source plug, and moves on to step SP97 where the processing procedure RT18 is completed.

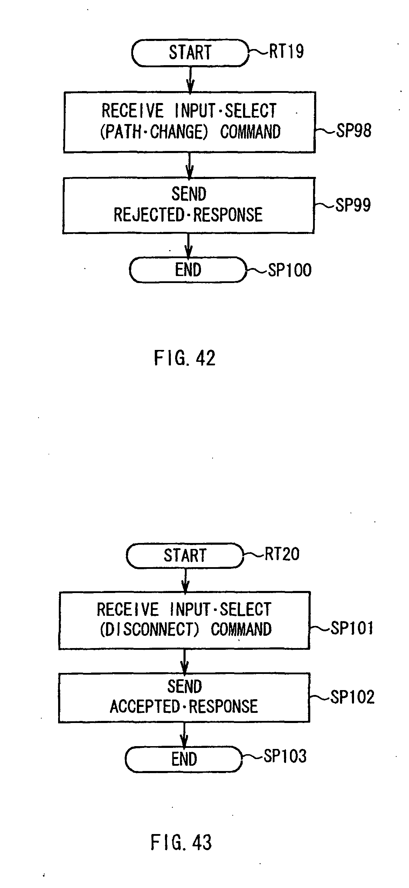

Further, when an input·select·command with PATH·CHANGE specified in the subfunction is sent, the TV 5 serving as the sink carries out the processing procedure RT19 shown in Fig. 42. Specifically, the TV 5 serving as the sink starts the processing procedure RT19 in Fig. 42, receives the input·select·command with PATH-CHANGE specified in the subfunction at step SP98, moves on to next step SP99 where it sends a rejected·response, and then moves on to step SP100 where the processing procedure RT19 is completed.

Further, when an input·select·command with DISCONNECT specified in the subfunction is sent, the TV 5 serving as the sink carries out the processing procedure RT20 shown in Fig. 43. Specifically, the TV 5 serving as the sink starts the processing procedure RT20 in Fig. 43, receives the input·select·command with DISCONNECT specified in the subfunction at step SP101, moves on to next step SP102 where it sends an accepted·response, and moves on to step SP103 where the processing procedure RT20 is completed.

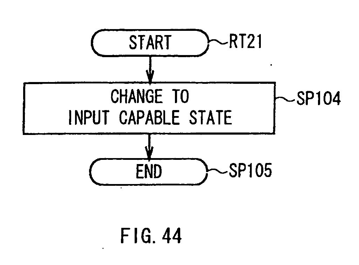

Further, in the case where the TV 5 serving as the sink changes to an input capable state, it performs the processing procedure RT21 shown in Fig. 44. Specifically, the TV 5 serving as the sink starts the processing procedure RT21 in Fig. 44, changes to an input capable state at step SP104, and then moves on to step SP105 where the processing procedure RT21 is completed.

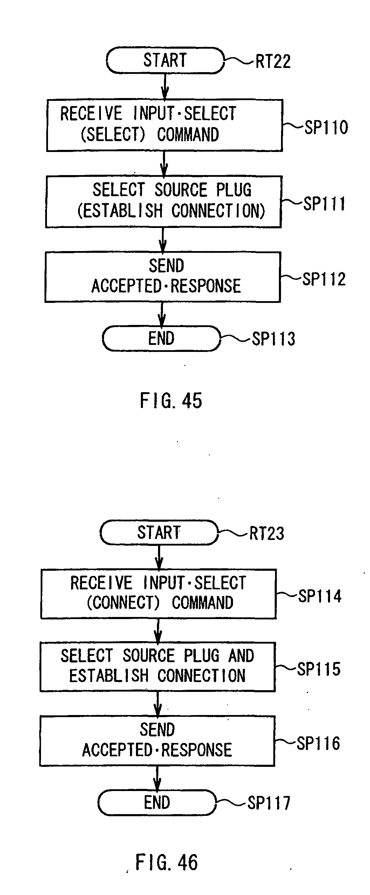

Now, Fig. 45 to Fig. 49 show processing procedures RT22 to RT26 which are carried out by the TV 5 serving as the sink in a state which it should establish an interdevice connection in the case where it has selected a source and has not established an interdevice connection. In this case, when an input·select·command with SELECT specified in the subfunction is sent, the TV 5 serving as the sink carries out the processing procedure RT22 shown in Fig. 45. Specifically, the TV 5 serving as the sink starts the processing procedure RT22 in Fig. 45, receives the input·select·command with SELECT specified in the subfunction at step SP110, and moves on to next step SP111 where it selects the source plug or establishes an interdevice connection after selecting the source plug.

Then, the TV 5 serving as the sink sends an accepted·response at step SP112 and then moves on to step SP113 where the processing procedure RT22 is completed.

Further, when an input·select·command with CONNECT specified in the subfunction is sent, the TV 5 serving as the sink carries out the processing procedure RT23 shown in Fig. 46. Specifically, The TV 5 serving as the sink starts the processing procedure RT23 in Fig. 46, receives the input·select·command with CONNECT specified in the subfunction at step SP114, and moves on to next step SP115 where it establishes an interdevice connection after selecting the source plug.

Then, after the TV 5 serving as the sink sends an accepted·response at step SP116, it moves on to step SP117 where the processing procedure RT23 is completed.

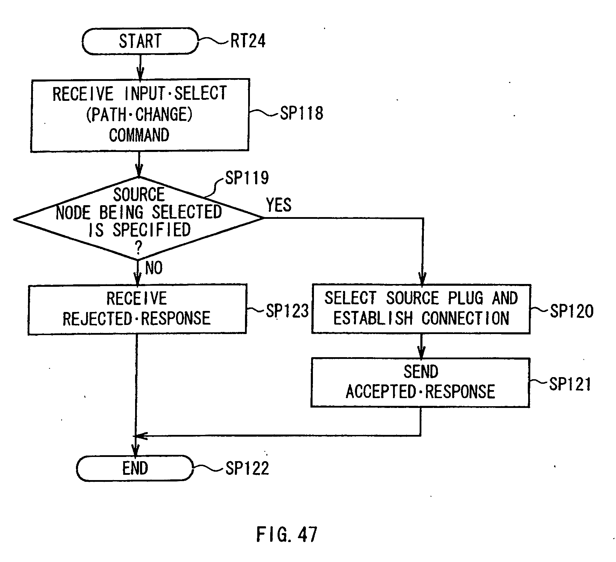

Further, when an input·select·command with PATH·CHANGE specified in the subfunction is sent, the TV 5 serving as the sink carries out the processing procedure RT24 shown in Fig. 47. Specifically, the TV 5 serving as the sink starts the processing procedure RT24 in Fig. 47, receives the input·select·command with PATH·CHANGE specified in the subfunction at step SP118, and moves on to next step SP119 where it judges whether the input·select·command specifies the source node being selected.

An affirmative result at step SP119 means that the input·select·command specifies the source node being selected, and in this case, the TV 5 serving as the sink moves on to next step SP120 where it establishes an interdevice connection after selecting the source plug.

Then, the TV 5 serving as the sink sends an accepted·response at step SP121 and moves on to step SP122 where the processing procedure RT24 is completed.

A negative result at step SP119, on the contrary, means that the input·select·command does not specify the source node being selected, and in this case, the TV 5 serving as the sink moves on to next step SP123 where it sends a rejected·response, and moves on to step SP122 where the processing procedure RT24 is completed.

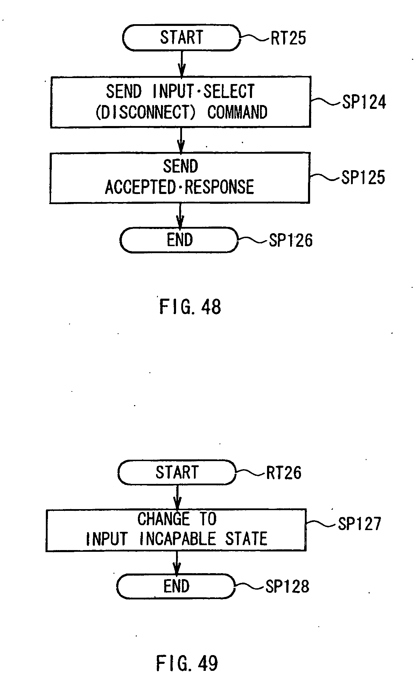

Further, when an input·select·command with DISCONNECT specified in the subfunction is sent, the TV 5 serving as the sink carries out the processing procedure RT25 shown in Fig. 48. The TV 5 serving as the sink starts the processing procedure RT25 in Fig. 48, receives the input·select·command with DISCONNECT specified in the subfunction at step SP124, moves on to next step SP125 where it sends an accepted·response, and moves on to step SP126 where the processing procedure RT25 is completed.

Further, in the case where the TV 5 serving as the sink changes to an input incapable state, it carries out the processing procedure RT26 shown in Fig. 49. Specifically, the TV 5 serving as the sink starts the processing procedure RT26 in Fig. 49, changes to the input incapable state at step SP127 and then moves on to step SP128 where the processing procedure RT26 is completed.

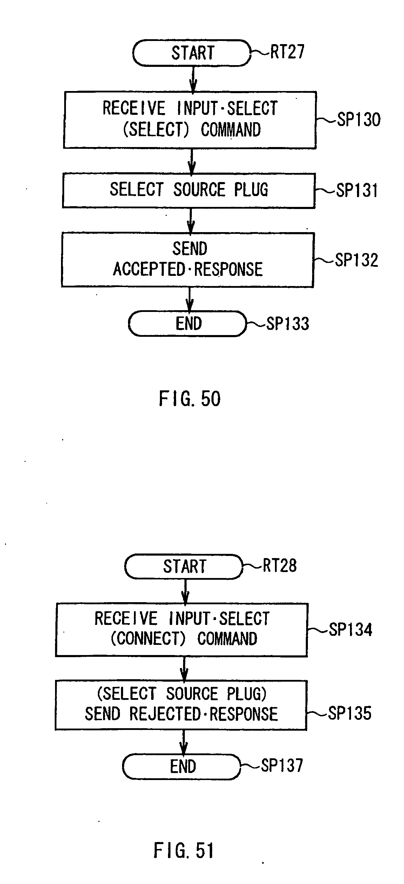

Now, Fig. 50 to Fig. 54 show processing procedures RT27 to RT31 which are performed by the TV 5 serving as the sink in a state where it should not establish an interdevice connection in the case where it has selected a source and has not established an interdevice connection. In this case, when an input·select·command with SELECT specified in the subfunction is sent, the TV 5 serving as the sink carries out the processing procedure RT27 shown in Fig. 50.

Specifically, the TV 5 serving as the sink starts the processing procedure RT27 in Fig. 50, receives the input·select·command with SELECT specified in the subfunction at step SP130, and moves on to next step SP131 where it selects the source plug.

Then, the TV 5 serving as the sink sends an accepted·response at step SP132, and moves on to step SP133 where the processing procedure RT27 is completed.

Further, when an input·select·command with CONNECT specified in the subfunction is sent, the TV 5 serving as the sink carries out the processing procedure RT28 shown in Fig. 51. Specifically, the TV 5 serving as the sink starts the processing procedure RT28 in Fig. 51, receives the input·select·command with CONNECT specified in the subfunction at step SP134, moves on to next step SP135 where it sends a rejected·response after selecting the source plug or sends a rejected·response, and then moves on to step SP137 where the processing procedure RT28 is completed.

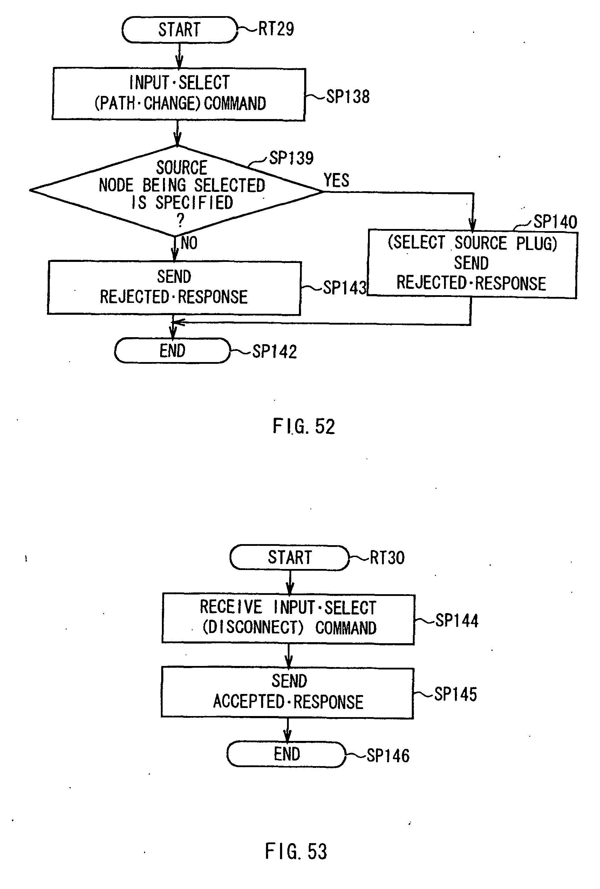

Further, when an input·select·command with PATH·CHANGE specified in the subfunction is sent, the TV 5 serving as the sink performs the processing procedure RT29 shown in Fig. 52. Specifically, the TV 5 serving as the sink starts the processing procedure RT29 in Fig. 52, receives the input·select·command with PATH·CHANGE specified in the subfunction at step SP138 and moves on to next step SP139 where it judges whether the input·select·command specifies the source node being selected.

An affirmative result at step SP139 means that the input·select·command specifies the source node being selected, and in this case, the TV 5 serving as the sink moves on to next step SP140 where it sends a rejected·response after selecting the source plug, or sends a rejected·response, and moves on to step SP142 where the processing procedure RT29 is completed.

A negative result at step SP139, on the contrary, means that the input·select·command does not specify the source node being selected, and in this case, the TV 5 serving as the sink moves on to next step SP143 where it sends a rejected·response, and then moves on to step SP142 where the processing procedure RT29 is completed.

Further, when an input·select·command with DISCONNECT specified in the subfunction is sent, the TV 5 serving as the sink performs the processing procedure RT30 shown in Fig. 53. Specifically, the TV 5 serving as the sink starts the processing procedure RT30 in Fig. 53, receives the input·select·command with DISCONNECT specified in the subfunction at step SP144, moves on to next step SP145 where it sends an accepted·response, and moves on to step SP146 where the processing procedure RT30 is completed.

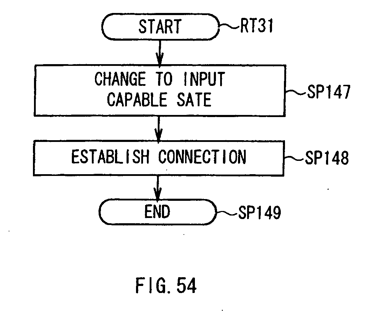

Further, in the case where the TV 5 serving as the sink changes to an input capable state, it carries out the processing procedure RT31 shown in Fig. 54. Specifically, the TV 5 serving as the sink starts the processing procedure RT31 in Fig. 54, changes to an input capable state at step SP147, moves on to step SP148 where it establishes an interdevice connection, and then moves on to step SP149 where the processing procedure RT31 is completed.

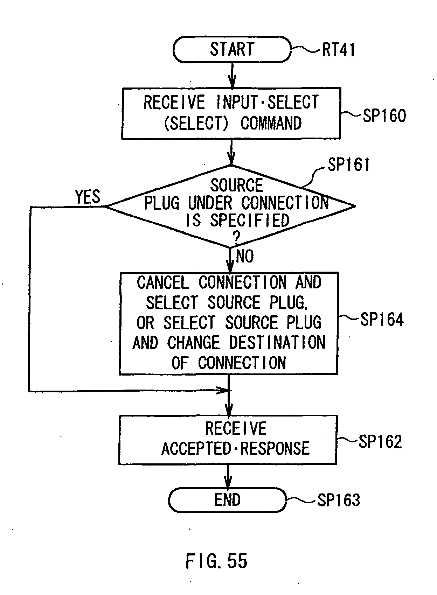

Now, Fig. 55 to Fig. 60 show the processing procedures which are performed by the TV 5 serving as the sink in a state where it has established an interdevice connection. In this case, when an input·select·command with SELECT specified in the subfunction is sent, the TV 5 serving as the sink performs the processing procedure RT41 shown in Fig. 55.

Specifically, the TV 5 serving as the sink starts the processing procedure RT41 in Fig. 55, receives the input·select·command with SELECT specified in the subfunction at step SP160, moves on to next step SP161 where it judges whether the input·select·command specifies the source plug under connection.

An affirmative result at step SP161 means that the input·select·command specifies the source plug under connection, and in this case, the TV 5 serving as the sink moves on to step SP162 where it sends an accepted·response and then moves on to step SP163 where the processing procedure RT41 is completed.

A negative result at step SP161, on the contrary, means that the input·select·command does not specify the source plug under connection, and in this case, the TV 5 serving as the sink moves on to step SP164 where it cancels the interdevice connection and selects the source plug, or selects the source plug and changes the destination of the interdevice connection, moves on to next step SP162 where it sends an accepted·response, and moves on to step SP163 where the processing procedure RT41 is completed.

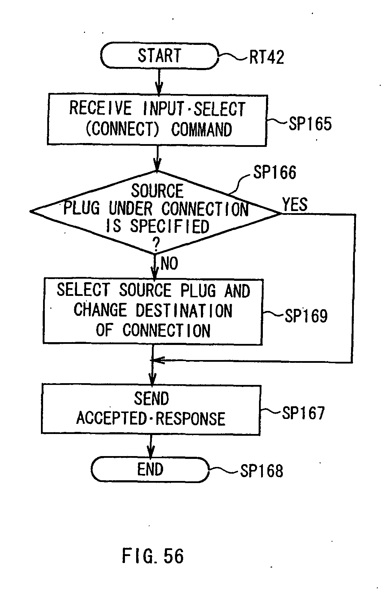

Further, when an input·select·command with CONNECT specified in the subfunction is sent, the TV 5 serving as the sink carries out the processing procedure RT42 shown in Fig. 56. Specifically, the TV 5 serving as the sink starts the processing procedure RT42 in Fig. 56, receives the input·select·command with CONNECT specified in the subfunction, and moves on to next step SP166 where it judges whether the input·select·command specifies the source plug under connection.

An affirmative result at step SP166 means that the input·select·command specifies the source plug under connection, and in this case, the TV 5 serving as the sink moves on to step SP167 where it sends an accepted·response, and moves on to step SP168 where the processing procedure RT42 is completed.

A negative result at step SP166, on the contrary, means that the input·select·command does not specify the source plug under connection, and in this case, the TV 5 serving as the sink moves on to step SP169 where it selects the source plug and changes the destination of the interdevice connection, moves on to next step SP167 where it sends an accepted-response, and then moves on to step SP168 where the processing procedure RT42 is completed.

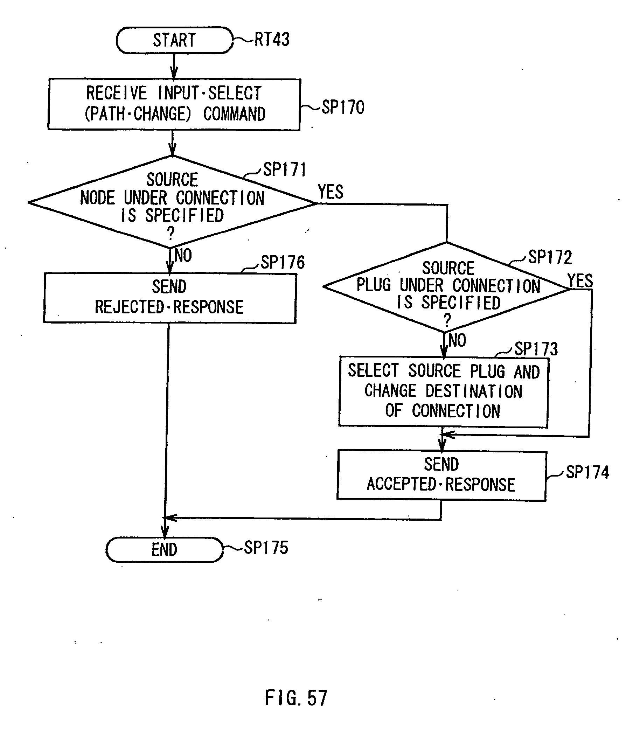

Further, when an input·select·command with PATH-CHANGE specified in the subfunction is sent, the TV 5 serving as the sink carries out the processing procedure RT43 shown in Fig. 57. Specifically, the TV 5 serving as the sink starts the processing procedure RT43 in Fig. 57, receives the input·select·command with PATH·CHANGE specified in the subfunction at step SP170, moves on to next step SP171 where it judges whether the input·select·command specifies the source node under connection.

An affirmative result at step SP171 means that the input·select·command specifies the source node under connection, and in this case, the TV 5 serving as the sink moves on to next step SP172 where it judges whether the input·select·command specifies the source plug under connection.

An affirmative result at step SP172 means that the input·select·command specifies the source plug under connection, and in this case, the TV 5 serving as the sink moves on to step SP174 where it sends an accepted response and moves on to step SP175 where the processing procedure RT43 is completed.

A negative result at step SP172, on the contrary, means that the input·select·command does not specify the source plug under connection, and in this case, the TV 5 serving as the sink moves on to step SP173 where it selects the source plug and changes the destination of the interdevice connection, and moves on to next step SP174 where it sends an accepted-response and moves on to step SP175 where the processing procedure RT43 is completed.

By the way, a negative result at step SP171 means that the input·select·command does not specify the source node under connection, and in this case, the TV 5 serving as the sink moves on to next step SP176 where it sends a rejeted·response and moves on to step SP175 where the processing procedure RT43 is completed.

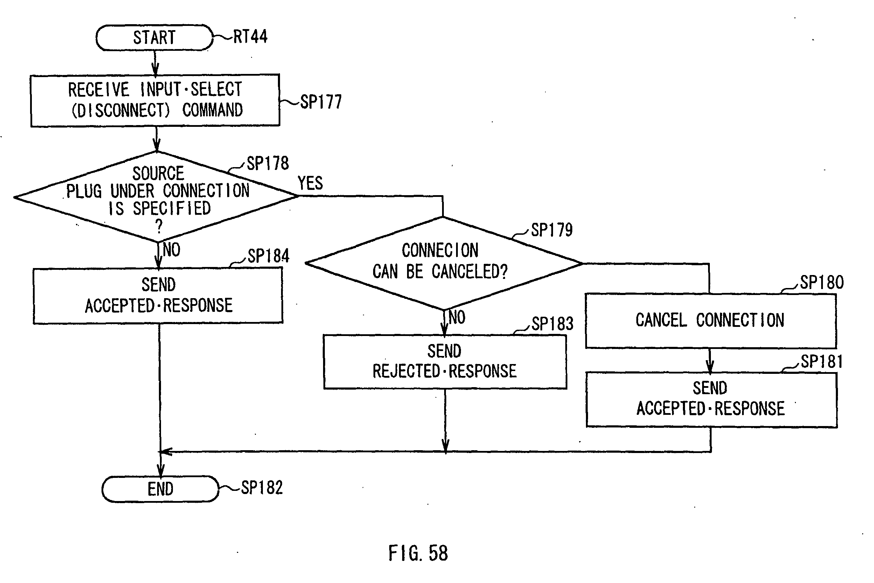

Further, when an input·select·command with DISCONNECT specified in the subfunction is sent, the TV 5 serving as the sink carries out the processing procedure RT44 shown in Fig. 58. Specifically, the TV 5 serving as the sink starts the processing procedure RT44 in Fig. 58, receives the input·select·command with DISCONNECT specified in the subfunction and moves on to next step SP178 where it judges whether the input·select·command specifies the source plug under connection.

An affirmative result at step SP178 means that the input·select·command specifies the source plug under connection, and in this case, the TV 5 serving as the sink moves on to step SP179 where it judges whether the TV 5 can cancel the interdevice connection.

An affirmative result at step SP179 means that the interdevice connection can be cancelled, and in this case, the TV 5 serving as the sink moves on to step SP180 where it cancels the interdevice connection. Then, the TV 5 serving as the sink sends an accepted·response at step SP181, and moves on to step SP182 where the processing procedure RT44 is completed.

A negative result at step SP179, on the contrary, means that the interdevice connection can not be cancelled, and in this case, the TV 5 serving as the sink moves on to step SP183 where it sends a rejected-response and moves on to next step SP182 where the processing procedure RT44 is completed.

A negative result at step SP178 means that the input·select·command does not specify the source plug under connection, and in this case, the TV 5 serving as the sink moves on to step SP184 where it sends an accepted·response and moves on to next step SP182 where the processing procedure RT44 is completed.

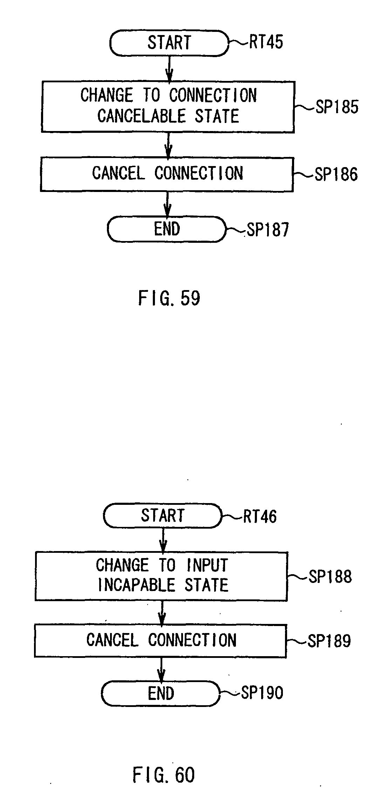

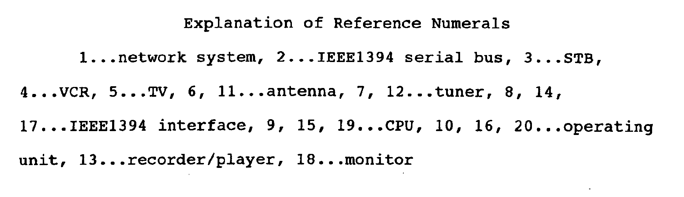

By the way, in such a situation, like aforementioned step SP183 shown in Fig. 58, that the interdevice connection can not be canceled and a rejected·response has been sent, when the TV 5 serving as the sink changes to a state where it can cancel the interdevice connection thereafter, it carries out the processing procedure RT45 shown in Fig. 59. Specifically, the TV 5 serving as the sink starts the processing procedure RT45 in Fig. 59, moves on to step SP185 where it changes to a state where it can cancel the interdevice connection, then moves on to step SP186 where it cancels the interdevice connection, and moves on to next step SP187 where the processing procedure RT45 is completed.

In addition, when the TV 5 serving as the sink changes to an input incapable state, it carries out the processing procedure RT46 shown in Fig. 60. Specifically, the TV 5 serving as the sink starts the processing procedure RT46 in Fig. 60, changes to an input incapable state at step SP188, moves on to step SP189 where it cancels the interdevice connection, and moves on to step SP190 where the processing procedure RT46 is completed.

### (6) Operation and effects of this embodiment

In the above system, a controller sends an input·select·command with a source specified, to a sink. When the sink receives this input·select·command, it registers the specified source. Then, the controller sends an output·preset·command to the source which then registers the sink.

When the source receives this output·preset·command, it sends an input·select·command with appropriate output plug information according to a signal path of the source attached thereto, to the sink specified by the output·preset·command received. When the sink receives this input·select·command, it establishes an interdevice connection using the attached output plug information.

Even if the controller does not know about a signal path inside the source, unlike the above, it can establish an interdevice connection between an appropriate output plug of the source and an appropriate input plug of the sink corresponding to the output plug of the source. In this case, since the controller does not need to know about the signal paths inside the source and sink, it can control a source and a sink which the controller does not know about. In addition, when the interdevice connection becomes unnecessary for the controller, the controller cancels the interdevice connection, resulting in the effective use of the resource of the 1394 serial bus 2.

Further, when the source receives an output·preset·command, it judges whether to establish an interdevice connection now. If it is judged from the result that the source is in a state where it should establish the interdevice connection, it sends an input·select·command with output plug information attached thereto, to the sink specified in the received output·preset·command.

If it is judged that the source is in a state where it should not establish an interdevice connection now, on the contrary, the source performs only sink registration without sending an input·select·command, and if the source changes its state to the one where it should establish an interdevice connection thereafter, it sends an input·select·command with the output plug information attached thereto, to the sink.

On the other hand, when the sink receives the input·select·command, it judges whether to establish the interdevice connection now. If it is judged from the result that the sink is in a state where it should establish the interdevice connection now, it establishes the interdevice connection based on the output plug information attached.

If it is judged that the sink is in a state where it should not establish the interdevice connection now, the sink only registers the output plug information attached, without establishing the interdevice connection, and if it changes its state to the one where it should establish the interdevice connection thereafter, establishes the interdevice connection based on the registered output plug information.

As described above, an interdevice connection is established in a condition that the source and the sink are both in a state where the interdevice connection should be established, resulting in the effective use of the resource of the 1394 serial bus 2.

In addition, in a case where the source requests the sink for the cancellation of an interdevice connection, it sends an input·select·command with DISCONNECT in the subfunction·field. When the sink receives this input·select·command, it judges whether it is in a state where the interdevice connection can be cancelled. If it is judged from the result that the sink is in a state that the interdevice connection can be cancelled, it cancels the interdevice connection. In this case, the sink cancels the source registration.

If it is judged that the sink is in a state where the interdevice connection can not be cancelled, on the contrary, the sink does not cancel the interdevice connection, and when the sink changes its state to the one where the interdevice connection can be cancelled thereafter, it automatically cancels the interdevice connection.

As described above, if an interdevice connection is not necessary for the source, i.e., if there is no AV data to be transmitted, the interdevice connection can be cancelled, thus resulting in the effective use of the limited bus resources.

According to the above system, an interdevice connection is established or cancelled depending on the states of the source and sink, and thus an interdevice connection can be established properly, resulting in the effective use of the bus resources.

### (7) Other Embodiments

Note that, the aforementioned embodiment has described the case where the STB 3 is set as a controller, the VCR 4 is set as a source, and the TV 5 is set as a sink. This invention, however, is not limited to this and the VCR 4 as the source or the TV 5 as the sink can be designated to operate as a controller too. In this case, the functional blocks operating as the controller perform prescribed internal processing on the functional blocks operating as the source or sink, so as to perform communication.

Further, the aforementioned embodiment has described the case where an interdevice connection is established using the PCRs. This invention, however, is not limited to this and the interdevice connection can be established using external·plugs.

Still further, the aforementioned embodiment has described the case where a PtoP connection is established using the "0" channel. This invention, however, is not limited to this and the PtoP connection can be established using another kind of'channel.

Still further, the aforementioned embodiment has described the case where it is judged whether an interdevice connection should be established, based on whether the VCR 4 is in an output state. This invention, however, is not limited to this and another kind of judgement can be applied.

Still further, the aforementioned embodiment has described the case where the network system 1 is applied as a signal processing system. This invention, however, is not limited to this and another kind of signal processing system can be applied, which is constructed by connecting a signal output device, a signal input device and a control device to a prescribed network and in which a signal path is established between the signal output device and the signal input device in response to a request of the control device and data signals outputted from the signal output device are inputted into the signal input device through the signal path.

Still further, the aforementioned embodiment has described the case where the VCR 4 as a source is applied as a signal output device. This invention, however, is not limited to this and another kind of signal output device which outputs data signals can be applied.

Still further, the aforementioned embodiment has described the case where the TV 5 serving as a sink is applied as a signal input device. This invention, however, is not limited to this and another kind of signal input device which inputs data signals outputted from a signal output device through a signal path thereto can be applied.

Still further, the aforementioned embodiment has described the case where the STB 3 serving as a controller is applied as a control device. This invention, however, is not limited to this and another kind of control device which establishes a signal path between a signal output device and a signal input device can be applied.

Still further, the aforementioned embodiment has described the case where the CPU 15 of the VCR 4 is applied as an establishment request means. This invention, however, is not limited to this and another kind of establishment request means can be applied, which sends an establishment request signal with signal path information according to a signal path inside a signal output device attached thereto when the establishment request signal requesting the establishment of a signal path is sent.

Still further, the aforementioned embodiment has described the case where the CPU 19 of the TV 5 is applied as an establishment means. This invention, however, is not limited to this and another kind of establishment means can be applied, which establishes a signal path between a signal output device and a signal input device based on signal path information.

Still further, the aforementioned embodiment has described the case where the CPU 15 of the VCR 4 is applied as a cancellation request means. This invention, however, is not limited to this and another kind of cancellation request means can be applied, which, if it is judged based on own operation state that a signal path should be cancelled, under such a state that the signal path is established between a signal output device and a signal input device, sends a cancellation request signal requesting the cancellation of the signal path.

Still further, the aforementioned embodiment has described the case where the CPU 19 of the TV 5 is applied as a cancellation means. This invention, however, is not limited to this and another kind of cancellation means can be applied, which, when receiving a cancellation request signal sent from a signal output device, cancels a signal path established between a signal output device and a signal input device depending on own operation state.

According to the present invention as described above, in a signal processing system which is constructed by connecting a signal output device, a signal input device and a control device to a prescribed network and in which a signal path is established between the signal output device and the signal input device in response to a request of the control device and data'signals outputted from the signal output device are inputted into the signal input device through the signal path, the signal output device comprises an establishment request means for, when an establishment request signal requesting the establishment of the signal path is sent to the signal input device, sending an establishment request signal to the establishment request signal with signal path information according to a signal path inside the signal output device attached thereto, and the signal input device comprises an establishment means for establishing the signal path between the signal output device and the signal input device based on the signal path information, thereby making it possible to realize a signal processing system capable of establishing a proper signal path between the signal output device and the signal input device.

Further, in a communication control method of a signal processing system which is constructed by connecting a signal output device, a signal input device and a control device to a prescribed network and in which a signal path is established between the signal output device and the signal input device in response to a request of the control device and data signals outputted from the signal output device are inputted into the signal input device through the signal path, the signal output device comprises an establishment request step of, when an establishment request signal requesting the establishment of the signal path is sent to the signal input device, sending the establishment request signal to the signal input device with signal path information according to a signal path inside the signal output device attached thereto, and the signal input device comprises an establishment step of establishing the signal path between the signal output device and the signal input device based on the signal path information, thereby making it possible to realize the communication control method capable of establishing a proper signal path between the signal output device and the signal input device.

### Industrial Utilization

The present invention is applied to a network system for communicating data between AV devices.

## Claims

1. A signal processing system constructed by connecting a signal output device, a signal input device, and a control device to a prescribed network for establishing a signal path between said signal output device and said signal input device in response to a request of said control device and for inputting data signals outputted from said signal output device into said signal input device through said signal path, wherein:
said signal output device comprises
establishment request means for, when an establishment request signal requesting the establishment of said signal path is sent to said signal input device, sending said establishment request signal to said signal input device with signal path information according to a signal path inside said signal output device attached to said establishment request signal; and
said signal input device comprises
establishment means for establishing said signal path between said signal output device and said signal input device based on said signal path information.

2. The signal processing system according to Claim 1, wherein
said establishment request means sends said establishment request signal to said signal input device depending on the operation state of said signal output device.

3. The signal processing system according to Claim 2, wherein
said establishment request means judges in response to a request of said control device whether said signal output device is in a state where it should establish said signal path, and if it is judged that said signal path should be established, transmits said establishment request signal to said signal input device, and if it is judged that said signal path should not be established, transmits said establishment request signal to said signal input device after the state is changed to the one where said signal path should be established.

4. The signal processing system according to Claim 1, wherein
said establishment means, when receiving said establishment request signal sent from said signal output device, establishes said signal path between said signal output device and said signal input device depending on the operation state of said signal input device.

5. The signal processing system according to Claim 4, wherein
said establishment means, when receiving said establishment request signal sent from said signal output device, judges whether said signal input device is in a state where said signal path should be established, and if it is judged that said signal path should be established, establishes said signal path between said signal output device and said signal input device, and if it is judged that said signal path should not be established, establishes said signal path between said signal output device and said signal input device after the state is changed to the one where said signal path should be established.

6. The signal processing system according to Claim 1, wherein:
said signal output device comprises
cancellation request means for sending a cancellation request signal requesting the cancellation of said signal path when it is judged based on own operation state that said signal path should be cancelled, under such a state that said signal path is established between said signal output device and said signal input device; and
said signal input device comprises
cancellation means for, when receiving said cancellation request signal sent from said signal output device, canceling said signal path established between said signal output device and said signal input device depending on own operation state.

7. The signal processing system according to Claim 6, wherein
said cancellation means, when receiving said cancellation request signal sent from said signal output device, judges whether said signal input device is in a state where said signal path should be cancelled, and if it is judged that said signal path should be cancelled, cancels said signal path established between said signal output device and said signal input device, and if it is judged that said signal path should not be cancelled, cancels said signal path established between said signal output device and said signal input device after the state is changed to the one where said signal path should be cancelled.

8. The signal processing system to Claim 1, wherein
said control device is united with said signal output device or said signal input device.

9. The signal processing system according to Claim 1, wherein said network is constructed by an IEEE1394 serial bus.

10. A signal output device of a signal processing system constructed by connecting a signal output device, a signal input device and a control device to a prescribed network for establishing a signal path between said signal output device and said signal input device in response to a request of said control device and for inputting data signals outputted from said signal output device into said signal input device through said signal path, said signal output device comprising
establishment request means for, when an establishment request signal requesting the establishment of said signal path is sent to said signal input device, sending said establishment request signal to said signal input device with signal path information according to a signal path inside said signal output device attached to said establishment request signal.

11. The signal output device according to Clam 10, wherein
said establishment request means sends said establishment request signal to said signal input device depending on the operation state of said signal output device.

12. The signal output device according to Claim 11, wherein
said establishment request means judges in response to a request of said control device whether said signal output device is in a state where said signal path should be established, and if it is judged that said signal path should be established, sends said establishment request signal to said signal input device, and if it is judged that said signal path should not be established, sends said establishment request signal to said signal input device after the state is changed to the one where said signal path should be established.

13. The signal output device according to Claim 10, comprising
cancellation request means for, when it is judged based on the operation state of said signal output device that said signal path should be cancelled, under such a state that said signal path is established between said signal output device and said signal input device, sending a cancellation request signal requesting the cancellation of said signal path.

14. The signal output device according to Claim 10, wherein
said control device is united with said signal output device.

15. The signal output device according to Claim 10, wherein
said network is constructed by an IEEE1394 serial bus.

16. A signal input device of a signal processing system constructed by connecting a signal output device, a signal input device, and a control device to a prescribed network for establishing a signal path between said signal output device and said signal input device in response to a request of said control device and for inputting data signals outputted from said signal output device into said signal input device through said signal path, said signal input device comprising
establishment means for establishing a logical signal path between said signal output device and said signal input device based on signal path information.

17. The signal input device according to Claim 16, wherein
said establishment means, when receiving an establishment request signal sent from said signal output device, establishes said signal path between said signal output device and said signal input device depending on the operation state of said signal input device.

18. The signal input device according to Claim 17, wherein
said establishment means, when receiving said establishment request signal sent from said signal output device, judges whether said signal input device is in a state where said signal path should be established, and if it is judged that said signal path should be established, establishes said signal path between said signal output device and said signal input device, and if it is judged that said signal path should not be established, establishes said signal path between said signal output device and said signal input device after the state is changed to the one where said signal path should be established.

19. The signal input device according to Claim 16, comprising
cancellation means for, when receiving a cancellation request signal sent from said signal output device, canceling said signal path established between said signal output device and said signal input device depending on the operation state of said signal input device.

20. The signal input device according to Claim 19, wherein
said cancellation means, when receiving said cancellation request signal sent from said signal output device, judges whether said signal input device is in a state where said signal path should be cancelled, and if it is judged that said signal path should be cancelled, cancels said signal path established between said signal output device and said signal input device, and if it is judged that said signal path should not be cancelled, cancels said signal path established between said signal output device and said signal input device after the state is changed to the one where said signal path should be cancelled.

21. The signal input device according to Claim 16, wherein
said control device is united with said signal input device.

22. The signal input device according to Claim 16, wherein
said network is constructed by an IEEE1394 serial bus.

23. A communication control method of a signal processing system constructed by connecting a signal output device, a signal input device and a control device to a prescribed network for establishing a signal path between said signal output device and said signal input device in response to a request of said control device and for inputting data signals outputted from said signal output device into said signal input device through said signal path, wherein:
said signal output device comprises
an establishment request step of, when an establishment request signal requesting the establishment of said signal path is sent to said signal input device, sending said establishment request signal to said signal input device with signal path information according to a signal path inside said signal output device attached to said establishment request signal; and
said signal input device comprises
an establishment step of establishing said signal path between said signal output device and said signal input device based on said signal path information.

24. The communication control method according to Claim 23, wherein
said establishment request step sends said establishment request signal to said signal input device depending on the operation state of said signal output device.

25. The communication control method according to Claim 24, wherein
said establishment request step judges in response to a request of said control device whether said signal output device is in a state where said signal path should be established, and if it is judged that said signal path should be established, sends said establishment request signal to said signal input device, and if it is judged that said signal path should not be established, sends said establishment request signal to said signal input device after the state is changed to the one where said signal path should be established.

26. The communication control method according to Claim 23, wherein
said establishment step, when receiving said establishment request signal sent from said signal output device, establishes said signal path between said signal output device and said signal input device depending on the operation state of said signal input device.

27. The communication control method according to Claim 26, wherein
said establishment step, when receiving said establishment request signal sent from said signal output device, judges whether said signal input device is in a state where said signal path should be established, and if it is judged that said signal path should be established, establishes said signal path between said signal output device and said signal input device, and if it is judged that said signal path should not be established, establishes said signal path between said signal output device and said signal input device after the state is changed to the one where said signal path should be established.

28. The communication control method according to Claim 23, wherein:
said signal output device comprises
a cancellation request step of, when it is judged based on own operation state that said signal path should be cancelled, under such a state that said signal path is established between said signal output device and said signal input device, sending a cancellation request signal requesting the cancellation of said signal path; and
said signal input device comprises
a cancellation step of, when receiving said cancellation request signal sent from said signal output device, canceling said signal path established between said signal output device and said input device depending on own operation state.

29. The communication control method according to Claim 28, wherein
said cancellation step, when receiving said cancellation request signal sent from said signal output device, judges whether said signal input device is in a state where said signal path should be cancelled, and if it is judged that said signal path should be cancelled, cancels said signal path established between said signal output device and said signal input device, and if it is judged that said signal path should not be cancelled, cancels said signal path established between said signal output device and said signal input device after the state is changed to the one where said signal path should be cancelled.

30. The communication control method according to Claim 28, wherein
said control device is united with said signal output device or said signal input device.

31. The communication control method according to Claim 28, wherein
said network is constructed by an IEEE1394 serial bus.
